# DEMANDE DE BREVET EUROPEEN

(11) **EP 4 064 313 A1**
(43) Date de publication de la demande: **28.09.2022**
(21) Numéro de dépôt: 22164263.0
(22) Date de dépôt: 25.03.2022
(51) Int. Cl.: H01H 71/02, H01H 73/06, H01H 83/20, H01H 83/22, H01H 9/16, H01H 73/48

(54) **DISPOSITIF DE PROTECTION ÉLECTRIQUE ET TABLEAU ÉLECTRIQUE COMPRENANT UN TEL DISPOSITIF DE PROTECTION ÉLECTRIQUE**

(30) Priorité: 26.03.2021 FR 2103128
(71) Demandeur: Schneider Electric Industries SAS, 92500 Rueil-Malmaison (FR)
(72) Inventeur: BURNOT, Claude, 38130 ECHIROLLES (FR); LEBEAU, Bernard, 38190 LES ADRETS (FR); CHANSAVANG, Albert, 38000 GRENOBLE (FR); PUPIN, Thomas, 38100 GRENOBLE (FR)
(74) Mandataire: Lavoix

(57) **Abrégé**

Un dispositif de protection électrique (14) comprend un boîtier (330), pouvant être monté sur le rail d'un tableau électrique ; un module principal (300) et deux modules auxiliaires (400, 500), chaque module comprenant un chemin de conduction (470, 570) comprenant une borne d'entrée (472, 572), à une extrémité supérieure (340) du boîtier, une borne de sortie (474, 574), à une extrémité inférieure (338) du boîtier, et un contact mobile (476, 574), mobile entre une position de conduction et une position d'isolement ; un mécanisme de commutation (450, 550) pour basculer le contact mobile ; un déclencheur pour basculer le mécanisme de commutation sous l'effet d'un défaut électrique ; une manette de commutation. Le module principal comprend une chambre de coupure (100). Le dispositif comprend un composant fonctionnel (350, 352), choisi parmi un deuxième déclencheur et un système de surveillance. Les déclencheurs et la chambre de coupure sont adjacents aux bornes d'entrée, de sorte à être disposés entre les bornes d'entrée et le composant fonctionnel, le composant fonctionnel étant adjacent aux bornes de sortie et s'étendant sur toute la largeur du boîtier.

## Description

La présente invention concerne un dispositif de protection électrique et un tableau électrique comprenant un tel dispositif de protection électrique.

Dans le domaine des installations électriques, il est connu d'équiper un tableau électrique avec un dispositif de protection électrique, tel qu'un disjoncteur. Généralement, ce dispositif de protection est monté sur un rail horizontal du tableau électrique. Ce dispositif comporte des bornes d'entrée, qui sont raccordées à un peigne d'alimentation et des bornes de sortie, qui sont raccordées à une installation électrique, qui est ainsi protégée par le dispositif de protection.

EP2506283A1 décrit un dispositif de ce type, à savoir un disjoncteur comprenant deux chemins de conduction, avec des contacts mobiles et des contacts fixes, une chambre de coupure et un équipement de protection contre les surcharges et les courts-circuits. La chambre de coupure et cet équipement de protection contre les surcharges sont placés en partie inférieure du disjoncteur. Ce disjoncteur comprend en outre, de manière standard, une manette qui doit être basculée vers le bas pour actionner l'ouverture des contacts mobiles, et vers le haut pour actionner la fermeture des contacts mobiles. Ce disjoncteur comprend en outre un équipement de protection contre les fuites de courant, qui est disposé en partie supérieure du disjoncteur, au-dessus des contacts mobiles.

Pour répondre aux besoins de protection et de surveillance des installations électriques, on prévoit généralement d'équiper un même tableau avec plusieurs disjoncteurs qui embarquent des fonctions différentes, adaptées au circuit qu'ils protègent et/ou surveillent. Par exemple, il peut être souhaitable qu'un premier dispositif de protection comporte, outre le déclencheur, les contacts et la chambre de coupure, un composant fonctionnel constitué par un déclencheur différentiel, alors qu'un autre comprendrait, à la place du déclencheur différentiel, un compteur de consommation. Au vu de la compacité du boîtier de ce type de dispositif, modifier un seul composant fonctionnel implique souvent de modifier toute l'architecture du dispositif, notamment pour s'adapter aux dimensions du composant fonctionnel choisi.

Alternativement, WO 03/012814 A1 décrit un disjoncteur quadripolaire comprenant quatre dispositifs de coupure magnétothermiques dans un même boîtier ainsi qu'une unité de protection contre les courants résiduels, disposée sur un côté du boîtier. La largeur du disjoncteur quadripolaires est ainsi augmentée pour accommoder la présence de l'unité de protection contre les courants résiduels.

L'invention vise notamment à obtenir un nouveau dispositif de protection électrique dont on peut facilement modifier l'équipement interne sans modification substantielle de son architecture.

L'invention a pour objet un dispositif de protection électrique comprenant :
- un boîtier, par l'intermédiaire duquel le dispositif de protection électrique est configuré pour être monté sur un rail appartenant à un tableau électrique,
- un module principal, comprenant :
   ∘ au moins un chemin de conduction, comprenant:
      ▪ une borne d'entrée, disposée à une extrémité supérieure du boîtier pour être connectée à un peigne d'alimentation, appartenant au tableau électrique ;
      ▪ une borne de sortie, disposée à une extrémité inférieure du boîtier ; et
      ▪ un contact mobile, qui est mobile en rotation par rapport au boîtier, entre une position de conduction, dans laquelle le contact mobile connecte électriquement la borne d'entrée à la borne de sortie de ce chemin de conduction, et une position d'isolement, dans laquelle la borne d'entrée et la borne de sortie dudit chemin de conduction sont électriquement isolées l'une de l'autre,
   ∘ un mécanisme de commutation qui est configuré pour basculer entre une configuration armée, dans laquelle le mécanisme de commutation met le contact mobile en position de conduction, et une configuration déclenchée, dans laquelle le mécanisme met le contact mobile en position d'isolement,
   ∘ une chambre de coupure, pour dissiper un arc électrique produit lorsque le contact mobile passe de la position de conduction à la position d'isolement,
   ∘ un premier déclencheur, qui est disposé dans le boîtier et qui est configuré pour faire basculer le mécanisme de commutation en configuration déclenchée sous l'effet d'un défaut électrique d'un premier type, et
   ∘ une manette de commutation :
      ▪ mobile en rotation autour d'un axe de manette ;
      ▪ actionnable par un utilisateur entre une position de fermeture, pour mettre le mécanisme de commutation en une position armée, et une position d'ouverture, pour mettre le mécanisme de commutation en configuration déclenchée ; et
      ▪ actionnable par le mécanisme de commutation depuis sa position de fermeture jusqu'à sa position d'ouverture, lorsque le mécanisme de commutation est basculé en configuration déclenchée sous l'effet du premier déclencheur.

Selon l'invention, le dispositif de protection électrique comprend en outre :
- un premier module auxiliaire et un deuxième module auxiliaire, chaque module auxiliaire comprenant individuellement:
   ∘ un chemin de conduction comprenant :
      ▪ une borne d'entrée, disposée à une extrémité supérieure du boîtier pour être connectée à un peigne d'alimentation, appartenant au tableau électrique ;
      ▪ une borne de sortie, disposée à une extrémité inférieure du boîtier ; et
      ▪ un contact mobile, qui est mobile en rotation par rapport au boîtier, entre une position de conduction, dans laquelle le contact mobile connecte électriquement la borne d'entrée à la borne de sortie de ce chemin de conduction, et une position d'isolement, dans laquelle la borne d'entrée et la borne de sortie dudit chemin de conduction sont électriquement isolées l'une de l'autre,
   ∘ un mécanisme de commutation qui est configuré pour basculer entre une configuration armée, dans laquelle le mécanisme de commutation met le contact mobile en position de conduction, et une configuration déclenchée, dans laquelle le mécanisme met le contact mobile en position d'isolement,
   ∘ un déclencheur auxiliaire, qui est disposé dans le boîtier et qui est configuré pour faire basculer le mécanisme de commutation en configuration déclenchée sous l'effet d'un défaut électrique d'un premier type, et
   ∘ une manette de commutation :
      ▪ mobile en rotation autour de l'axe de manette ;
      ▪ actionnable par un utilisateur entre une position de fermeture, pour mettre le mécanisme de commutation en une position armée, et une position d'ouverture, pour mettre le mécanisme de commutation en configuration déclenchée ; et
      ▪ actionnable par le mécanisme de commutation depuis sa position de fermeture jusqu'à sa position d'ouverture, lorsque le mécanisme de commutation est basculé en configuration déclenchée sous l'effet du déclencheur auxiliaire,
      la manette de commutation du module principal, la manette de commutation du premier module auxiliaire et la manette de commutation du deuxième module auxiliaire étant mécaniquement liées de sorte que l'actionnement d'une des trois manettes entraîne l'actionnement des deux autres manettes et le basculement des mécanismes de commutation du module principal, du premier module auxiliaire et du deuxième module auxiliaire,
- un composant fonctionnel, qui est choisi parmi :
   ∘ un deuxième déclencheur configuré pour faire basculer les mécanismes de commutation du module principal et des modules auxiliaires en configuration déclenchée sous l'effet d'un défaut électrique d'un deuxième type, et
   ∘ un système de surveillance.

De plus le premier déclencheur et la chambre de coupure du module principal sont adjacents à la borne d'entrée du chemin de conduction du module principal, de sorte à être disposés entre ladite borne d'entrée et le composant fonctionnel, le premier module auxiliaire et le deuxième module auxiliaire sont juxtaposés au module principal, selon une direction de largeur du boîtier, et le composant fonctionnel s'étend sur toute la largeur du boîtier et est adjacent aux bornes de sortie du module principal et des modules auxiliaires.

Une idée à la base de l'invention est qu'un volume interne du boîtier qui est adjacent aux bornes d'entrée est généralement contraint et limité par le fait que les bornes d'entrées doivent être connectés au peigne d'alimentation, par nature rigide. Au contraire, il est souvent plus aisé de modifier la forme du boîtier au niveau des bornes de sortie, généralement prévues pour être connectées à des conducteurs souples. Ainsi, l'invention prévoit de placer le premier déclencheur et la chambre de coupure de façon adjacente aux bornes d'entrée, dans la mesure où ces composants sont rarement modifiés, car ils assurent la fonction de protection dévolue au dispositif de protection électrique. Dans la mesure où le composant fonctionnel est le plus susceptible d'être modifié, l'invention prévoit de placer le composant fonctionnel additionnel de façon adjacente aux bornes de sortie, en s'étendant sur toute la largeur du boîtier, puisqu'il est plus facile, si nécessaire, de modifier la zone du boîtier portant les bornes de sortie, notamment pour s'adapter à l'encombrement du composant fonctionnel additionnel à accueillir. Ainsi, il est facile de prévoir, avec une même conception générale du dispositif de protection électrique, de remplacer le composant fonctionnel par un autre.

Selon des aspects avantageux, mais non obligatoire de l'invention, le dispositif de protection électrique incorpore une ou plusieurs des caractéristiques suivantes, prises isolément ou selon toutes combinaisons techniquement admissibles :
- Le premier déclencheur est un déclencheur magnétique, disposé dans le boîtier entre la borne d'entrée et le contact mobile du module principal et configuré pour faire basculer le mécanisme de commutation du module principal en configuration déclenchée lorsque le défaut électrique du premier type est un court-circuit se produisant en aval de la borne de sortie du module principal.
- Le module principal comprend en outre un déclencheur thermique, disposé dans le boîtier entre le contact mobile et la borne de sortie du module principal et qui fait basculer le mécanisme de commutation du module principal en configuration déclenchée lorsque le défaut électrique du premier type est une surcharge se produisant en aval de la borne de sortie.
- Le composant fonctionnel est un deuxième déclencheur, qui est choisi parmi :
   ∘ un déclencheur différentiel configuré pour faire basculer le mécanisme de commutation du module principal et des modules auxiliaires en configuration déclenchée lorsque le défaut électrique du deuxième type est un courant différentiel ;
   ∘ un déclencheur commandé par un système de communication ; et
   ∘ un déclencheur configuré pour faire basculer le mécanisme de commutation du module principal et des modules auxiliaires en configuration déclenchée lorsque le défaut électrique du deuxième type est un arc électrique se produisant sur une installation connectée à la borne de sortie du chemin de conduction du module principal.
- Le composant fonctionnel est un système de surveillance configuré pour mesurer des grandeurs physiques représentatives du fonctionnement du dispositif de protection, et/ou détecter l'état de fonctionnement du dispositif de protection, et/ou communiquer des informations avec un système d'information distant.
- Le boîtier comprend une façade, qui relie l'extrémité supérieure à l'extrémité inférieure et porte la manette de commutation du module principal et les manettes de commutation des modules auxiliaires, et un dos, opposée à la façade, par l'intermédiaire duquel le dispositif de protection électrique est configuré pour être monté sur le rail, le mécanisme de commutation du module principal étant disposé entre la façade et le premier déclencheur.
- La chambre de coupure est disposée, selon une direction de hauteur du boîtier, entre la borne d'entrée et le contact mobile du module principal, et est disposée, selon une direction de profondeur du boîtier, entre le premier déclencheur du module principal et un dos du boîtier.
- Le module principal comprend deux chemins de conduction, électriquement isolés l'un de l'autre et répartis dans la largeur du boîtier, chaque chemin de conduction comprenant individuellement :
   ∘ une borne d'entrée, disposée à une extrémité supérieure du boîtier pour être connectée à un peigne d'alimentation, appartenant au tableau électrique;
   ∘ une borne de sortie, disposée à une extrémité inférieure du boîtier ; et
   ∘ un contact mobile, qui est mobile en rotation par rapport au boîtier, entre une position de conduction, dans laquelle le contact mobile connecte électriquement la borne d'entrée à la borne de sortie de ce chemin de conduction, et une position d'isolement, dans laquelle la borne d'entrée et la borne de sortie dudit chemin de conduction sont électriquement isolées l'une de l'autre.
- Le boîtier comprend une cloison interne électriquement isolante, qui relie l'extrémité supérieure à l'extrémité inférieure et sépare le boîtier en deux compartiments, selon une direction de largeur du boîtier, les deux chemins de conduction du module principal étant disposés respectivement dans l'un desdits compartiments, le premier déclencheur étant disposé dans un seul desdits compartiments.
- Lorsque la manette de commutation du module principal est pivotée de la position de fermeture vers la position d'ouverture et que les contacts mobiles du module principal et des modules auxiliaires sont pivotés de leur position de conduction à leur position d'isolement, chaque contact mobile est mobile en rotation par rapport au boîtier autour d'un axe de contact mobile parallèle à l'axe de manette, les contacts mobiles tournent dans le même sens autour de leur axe de contact mobile respectif et le sens de rotation des contacts mobiles est opposé au sens de rotation de la manette de commutation.
- Le module principal, le premier module auxiliaire et le deuxième module auxiliaire sont séparés par des parois électriquement isolantes.

Selon un autre aspect, l'invention concerne également un tableau électrique comprenant un peigne d'alimentation et un rail de fixation disposé sous le peigne d'alimentation. Selon l'invention, le tableau électrique comprend un dispositif de protection électrique tel que décrit ci-dessus, le dispositif de protection électrique étant fixé au rail de fixation, de sorte que l'axe de manette est parallèle au rail de fixation, la borne d'entrée du module principal étant électriquement connectée au peigne d'alimentation, un connecteur du peigne d'alimentation étant enfiché dans la borne d'entrée.

Ce tableau électrique induit les mêmes avantages que ceux mentionnés ci-dessus au sujet du dispositif de protection électrique de l'invention.

L'invention sera mieux comprise et d'autres avantages de celle-ci apparaîtront à la lumière de la description suivante, exposant des exemples conformes à son principe, illustrés par les dessins annexés suivants :
[FIG 1] La figure 1 est une vue en perspective d'un tableau électrique conforme à l'invention, ce tableau électrique comprenant plusieurs dispositifs de protection électrique conformes à l'invention, tous représentés dans une configuration fermée.
[FIG 2] La figure 2 est une vue en perspective d'un dispositif de protection électrique conforme à un premier mode de réalisation de l'invention, montré dans une configuration fermée.
[FIG 3] La figure 3 est une vue de côté du dispositif de protection électrique de la figure 2, sous un premier angle, montré dans une configuration fermée, où une partie d'un boîtier du dispositif de protection électrique est masquée.
[FIG 4] La figure 4 est une vue de côté partielle du dispositif de protection électrique des figures 2 et 3, selon le détail IV de la figure 3.
[FIG 5] La figure 5 est une vue de côté du dispositif de protection électrique des figure 2 à 4, sous un deuxième angle, montré dans une configuration fermée, où une partie du boîtier est masquée.
[FIG 6] La figure 6 est une vue de côté du dispositif de protection électrique des figure 2 à 5, sous le premier angle, montré dans une configuration ouverte, où une partie du boîtier est masquée.
[FIG 7] La figure 7 est une vue de côté du dispositif de protection électrique des figure 2 à 6, sous le deuxième angle, montré dans une configuration ouverte, où une partie du boîtier et une partie d'une chambre de coupure du dispositif sont masquées.
[FIG 8] La figure 8 est une vue de côté du dispositif de protection électrique des figures 2 à 7, sous le premier angle, montré dans une configuration en cours d'ouverture, où une partie du boîtier est masquée.
[FIG 9] La figure 9 est une vue de côté du dispositif de protection électrique des figures 2 à 8, sous le deuxième angle, montré dans une configuration en cours d'ouverture, où une partie du boîtier et une partie d'une chambre de coupure du dispositif sont masquées.
[FIG 10] La figure 10 est une vue en perspective partielle du dispositif de protection électrique des figures 2 à 9, montré dans une configuration fermée, où une partie du boîtier et une partie d'un mécanisme de commutation du dispositif sont masquées.
[FIG 11] La figure 11 est une vue de côté, sous le deuxième angle, d'une partie du dispositif de protection électrique des figures précédentes 2 à 10, montrée dans une configuration fermée.
[FIG 12] La figure 12 est une vue de côté, sous le deuxième angle, d'une partie du dispositif de protection électrique des figures précédentes 2 à 10, montrée dans une configuration ouverte.
[FIG 13] La figure 13 est une vue en perspective d'un autre dispositif de protection électrique conforme à un deuxième mode de réalisation de l'invention, montré dans une configuration fermée.

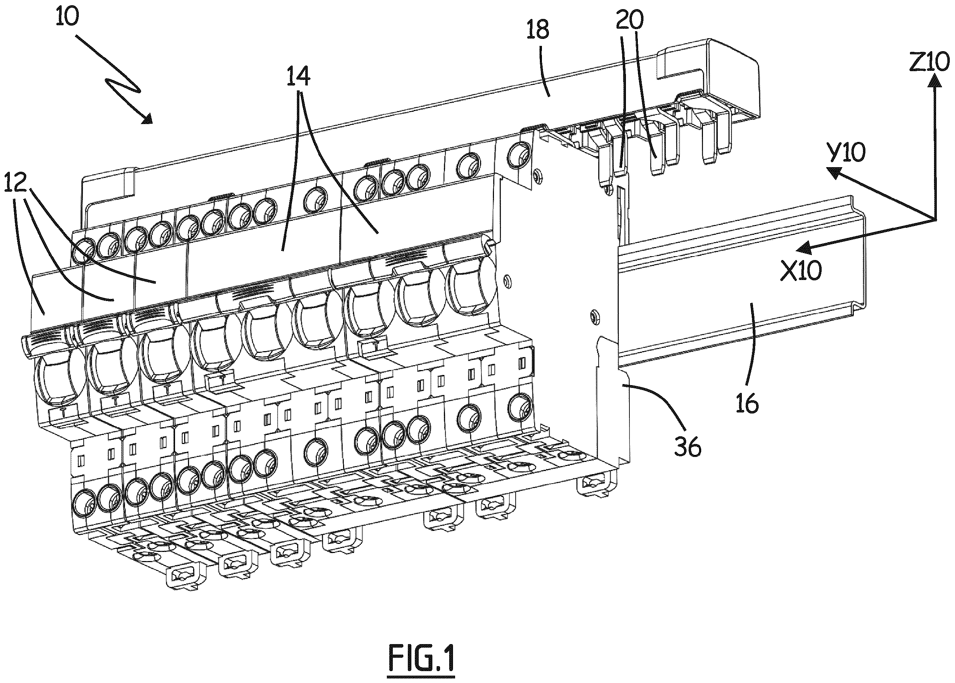

La figure 1 montre un tableau électrique 10 conforme à l'invention. Le tableau électrique 10 est configuré pour être intégré à une installation électrique, équipant par exemple un bâtiment.

Dans l'exemple, le tableau électrique 10 se présente sous la forme d'une rangée modulaire. Avantageusement, cette rangée modulaire peut être associée à d'autres rangées modulaires.

Le tableau électrique 10 accueille plusieurs dispositifs de protection électrique. Le tableau électrique 10 est modulaire, c'est-à-dire qu'il est équipé d'un nombre variable de dispositifs de protection électrique, selon les besoins de l'installation électrique à laquelle il est configuré pour être intégré, et que les dispositifs de protection électrique peuvent être de plusieurs types.

Dans l'exemple représenté à la figure 1 sont représentés des dispositifs de protection électrique 12 d'un premier type et des dispositifs de protection électrique 14 d'un deuxième type.

Le tableau électrique 10 comprend en outre un rail de fixation 16, sur lequel les dispositifs de protection électrique 12 et 14 sont installés.

Le rail de fixation 16 s'étend selon un axe de largeur X10 du tableau électrique 10. Ainsi, les dispositifs de protection électrique 12 et 14 sont juxtaposés selon l'axe de largeur X10.

On définit également un axe de profondeur Y10 et un axe de hauteur Z10 du tableau électrique 10, qui sont perpendiculaires entre eux et à l'axe de largeur X10. De préférence, lorsque le tableau électrique 10 est intégré à l'installation électrique, l'axe de hauteur Z10 est vertical et dirigée vers le haut.

Le tableau électrique 10 comprend en outre un peigne d'alimentation 18, qui s'étend selon l'axe de largeur X10, qui est relié à tous les dispositifs de protection électrique 12 et 14 et qui alimente en énergie électrique les dispositifs de protection électrique, par l'intermédiaire de connecteurs 20.

En pratique, dans le peigne d'alimentation 18, les connecteurs 20 sont répartis en plusieurs groupes, tous les connecteurs d'un groupe étant électriquement reliés entre eux et électriquement isolés des connecteurs des autres groupes. Dans l'exemple représenté, le peigne d'alimentation 18 comprend quatre groupes de connecteurs 20.

De préférence, parmi les quatre groupes de connecteurs 20, trois sont reliés chacun à une phase d'alimentation du tableau électrique 10 et un est relié à un conducteur de neutre du tableau électrique.

En variante, le peigne d'alimentation 18 comprend un nombre différent de groupes de connecteurs 20, par exemple deux groupes de connecteurs, respectivement reliés à une phase d'alimentation et à un conducteur de neutre.

Le peigne d'alimentation 18 est disposé au-dessus du rail de fixation 16, selon l'axe de hauteur Z10 du tableau électrique.

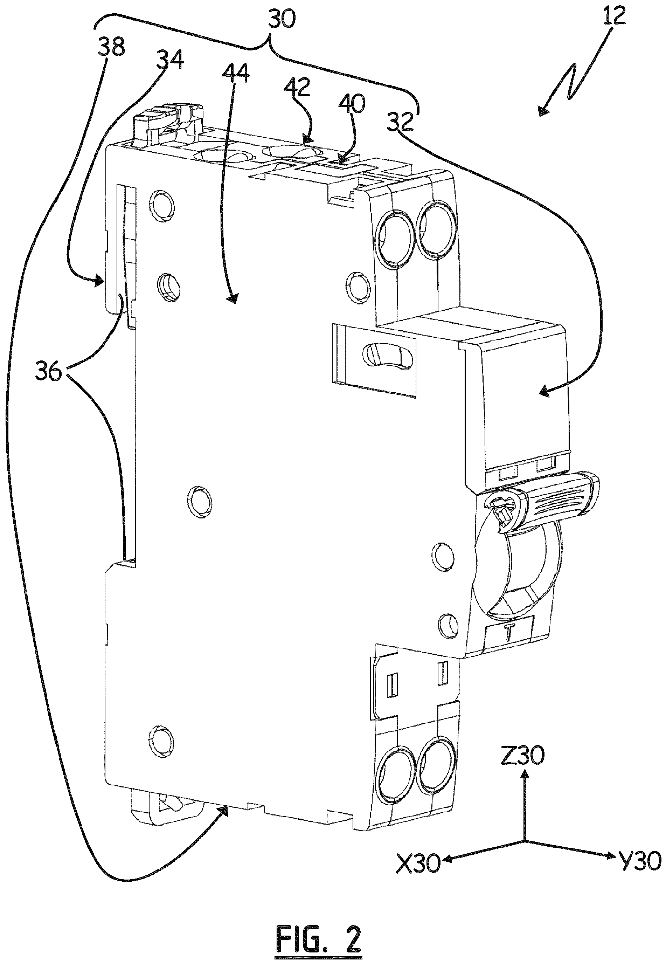

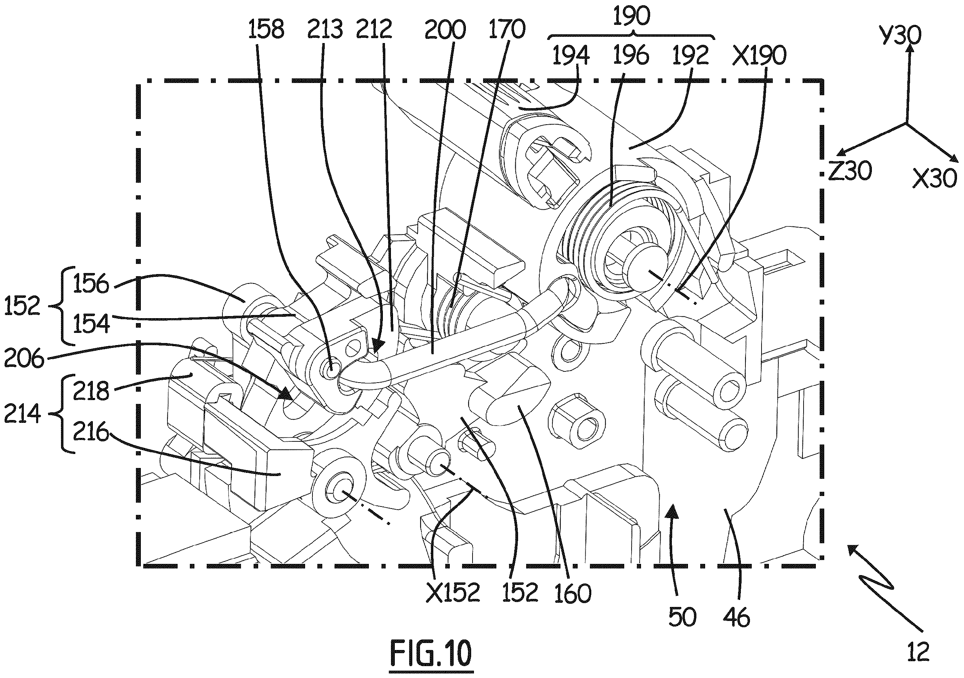

Les figures 2 à 12 montrent l'un des dispositifs de protection électrique 12, conforme à un premier mode de réalisation de l'invention.

Le dispositif 12 comprend un boîtier 30. On définit une direction de largeur X30, une direction de profondeur Y30 et une direction de hauteur Z30 du boîtier 30, qui sont perpendiculaires entre elles et fixes par rapport au boîtier 30.

Le boîtier 30 constitue une enveloppe essentiellement fermée et électriquement isolante. Le boîtier 30 comprend avantageusement une façade 32 et un dos 34, répartis suivant la direction de profondeur Y30, avec la façade 32 dans la direction Y30 par rapport au dos 34.

Pour être intégré au tableau électrique 10, le dispositif 12 est avantageusement conçu pour être fixé sur le rail de fixation 16 par l'intermédiaire du boîtier 30. Pour cela, le dispositif 12 comprend avantageusement, au dos 34, tout moyen de fixation approprié, comme par exemple une pince d'encliquetage 36, par l'intermédiaire duquel le dispositif 12 peut être fixement attaché sur le rail 16. Lorsque le dispositif 12 est fixé sur le rail 16, la direction X30 est parallèle au rail 16 et à l'axe X10, la direction Y30 est parallèle à l'axe Y10 et la direction Z30 est parallèle à l'axe Z10.

Ainsi, en configuration montée sur le tableau électrique 10, le dos 34 du boîtier 30 du dispositif de protection électrique 12 est dirigé vers le rail 16 et la façade 32 est opposée au rail 16.

Le boîtier 30 comprend avantageusement une extrémité inférieure 38 et une extrémité supérieure 40 réparties suivant la direction Z30, avec l'extrémité supérieure 40 dans la direction Z30 par rapport à l'extrémité inférieure 38, l'extrémité supérieure 40 étant disposée au-dessus de l'extrémité inférieure 38 en configuration montée du dispositif 12 sur le tableau électrique 10.

Le boîtier 30 comprend avantageusement un flanc droit 42 et un flanc gauche 44, préférentiellement plans et parallèles, répartis suivant la direction X30, avec le flanc gauche 44 dans la direction X30 par rapport au flanc droit, le flanc gauche 44 étant disposé à gauche du flanc droit 42 en configuration montée du dispositif 12 sur le tableau électrique 10.

De préférence, la largeur du dispositif 12, mesurée selon la direction X30 entre le flanc gauche 44 et le flanc droit 42, est comprise entre 15 mm et 25 mm, de préférence encore égale à 18 mm.

La façade 32 et le dos 34, ainsi que les flancs gauche 44 et droit 42, relient l'extrémité 38 à l'extrémité 40 suivant la direction Z30. La façade 32 et le dos 34 relient chacun le flanc droit au flanc gauche, suivant la direction X30. Chaque flanc relie le dos 34 à la façade 32, suivant la direction Y30.

Lorsque deux dispositifs 12 sont juxtaposés dans le tableau électrique 10 comme montré sur la figure 1, le flanc gauche 44 d'un premier dispositif 12 est contre le flanc droit 42 d'un deuxième dispositif 12.

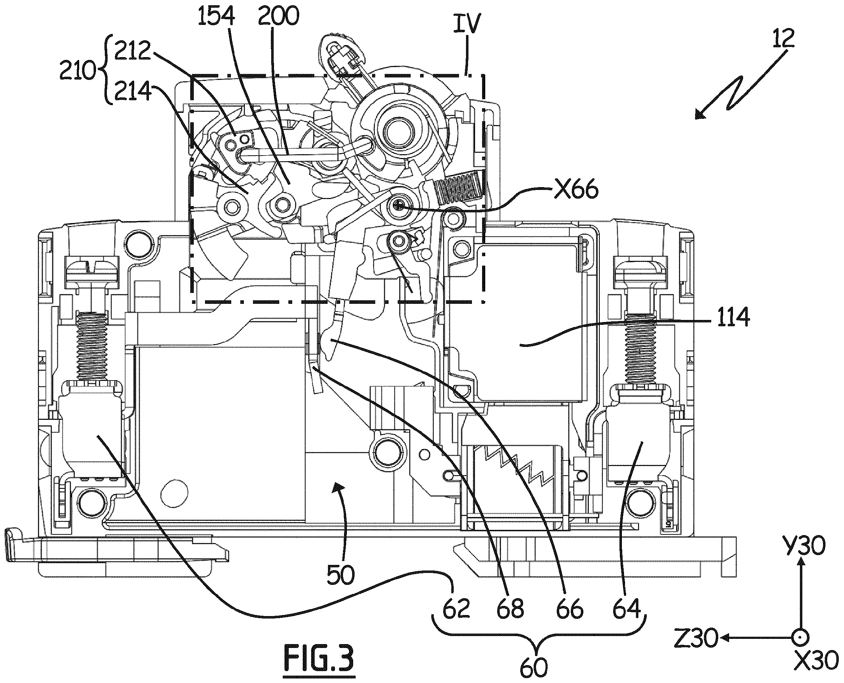

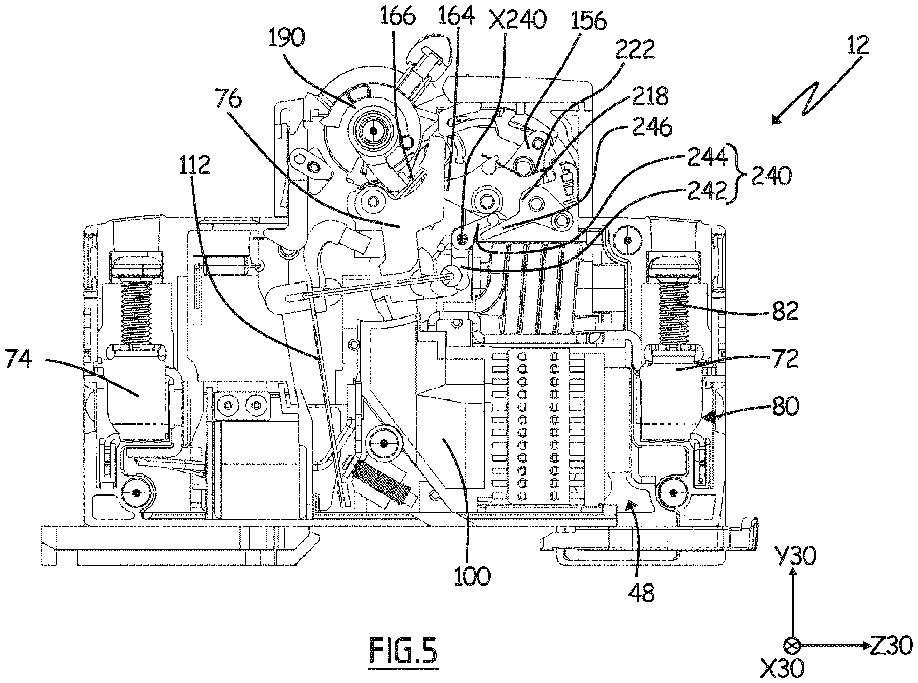

De préférence, le boîtier 30 comprend une cloison interne 46 visible sur les figures 3 à 10, qui s'étend parallèlement aux directions Y30 et Z30 et sépare un volume interne du boîtier 30 en un compartiment de droite 48, visible sur les figures 5, 7 et 9 et en un compartiment de gauche 50, visible sur les figures 3, 4, 6, 8 et 10.

Les compartiments de droite 48 et de gauche 50 sont répartis suivant la direction X30. Le compartiment de droite 48 est délimité par la cloison 46 et le flanc droit 42 suivant la direction X30, par les extrémités 38 et 40 suivant la direction Z30, et par la façade 32 et le dos 34 suivant la direction Y30. Le compartiment de gauche 50 est délimité par la cloison 46 et le flanc gauche 44 suivant la direction X30, par les extrémités 38 et 40 suivant la direction Z30, et par la façade 32 et le dos 34 suivant la direction Y30.

Le dispositif de protection électrique 12 est un dispositif bipolaire, en ce qu'il comporte deux chemins de conduction.

On prévoit que chaque chemin de conduction comporte une borne d'entrée, une borne de sortie, un contact mobile et un contact fixe.

Ainsi, un premier chemin de conduction 60 comporte une borne d'entrée 62, une borne de sortie 64, un contact mobile 66 et un contact fixe 68, visibles sur les figures 3, 6 et 8, et un deuxième chemin de conduction 70 comporte une borne d'entrée 72, une borne de sortie 74, un contact mobile 76 et un contact fixe 78, visibles sur les figures 5, 7 et 9.

De préférence, les chemins de conduction 60 et 70 sont électriquement isolés l'un de l'autre. Pour cela, de préférence, chaque chemin de conduction est entièrement disposé dans l'un des compartiments respectifs 48 ou 50 du boîtier 30. Ici, le premier chemin de conduction 60 est disposé dans le compartiment de gauche 50 et le deuxième chemin de conduction 70 est disposé dans le compartiment de droite 48. La cloison interne 46 est interposée entre les chemins 60 et 70, de sorte à garantir qu'ils sont électriquement isolés l'un de l'autre.

Les bornes d'entrée 62 et 72 sont disposées à l'extrémité supérieure 40 du boîtier 30, de façon à pouvoir être électriquement connectées aux connecteurs 20 du peigne d'alimentation 18 appartenant au tableau électrique.

Par exemple, la borne d'entrée 62 est reliée à un premier connecteur 20 appartenant à un premier groupe de connecteurs du peigne d'alimentation 18, alors que la borne d'entrée 72 est reliée à un deuxième connecteur 20 appartenant à un deuxième groupe de connecteurs du peigne d'alimentation 18.

En pratique, pour relier les bornes d'entrée 62 et 72 aux connecteurs 20, les connecteurs 20 sont enfichés dans les bornes d'entrée. Pour cela, chaque borne d'entrée 62 et 72 comprend une cavité 80, configurée pour accueillir un connecteur 20, et une vis 82, configurée pour serrer le connecteur 20 contre la borne d'entrée de sorte à établir une continuité électrique entre le connecteur et la borne d'entrée.

Ainsi, le dispositif 12 est raccordé au peigne d'alimentation 18 simplement en enfichant les connecteurs 20 du peigne dans les bornes d'entrée 62 et 72 puis en serrant les vis 82.

Dans l'exemple, les bornes d'entrée 62 et 72, ainsi que les bornes de sortie 64, 74, sont des bornes à vis. En variante, les bornes d'entrée 62, 72 et/ou les bornes de sortie 64, 74 sont des bornes automatiques, également appelées bornes embrochables, ou des bornes à connecteur rapide.

Chaque chemin de conduction constitue un pôle distinct du dispositif 12. De préférence, le chemin 60 constitue un pôle de neutre, alors que le chemin 70 constitue un pôle de phase. Ainsi, le chemin 60 est relié à un conducteur de neutre du tableau électrique par l'intermédiaire d'un connecteur 20 et le chemin 70 est relié à une phase d'alimentation du tableau électrique par l'intermédiaire d'un connecteur 20. Autrement dit, chaque chemin de conduction est prévu pour être porté à un potentiel distinct. De préférence, le dispositif 12 est conçu pour être utilisé sous une basse tension, c'est-à-dire une tension comprise entre 100V (Volts) et 600V, par exemple une tension de 230V.

En variante, les deux chemins de conduction sont des chemins de conduction de phase.

Les bornes de sortie 64 et 74 sont préférentiellement disposées à l'extrémité inférieure 38 du boîtier 30, de façon à pouvoir être électriquement connectées à un circuit électrique alimentant des charges réceptrices, par exemple, dans le cas d'un bâtiment, des appareils électroménagers ou de l'éclairage. Ces charges électriques sont alors alimentées avec l'énergie électrique fournie aux bornes d'entrée 62 et 72 par les connecteurs 20 du peigne d'alimentation 18, au travers du dispositif 12.

En variante, la borne d'entrée 62 du chemin de conduction relié à un conducteur de neutre du tableau électrique est disposée à l'extrémité inférieure 38 du boîtier 30, c'est-à-dire à proximité des bornes de sortie 64 et 74, et le chemin de conduction 60 forme une boucle dans le boîtier. Ainsi, dans cette variante, trois bornes sont disposées à l'extrémité inférieure 38 du boîtier et seule la borne d'entrée 72 est disposée à l'extrémité supérieure 40 du boîtier. Avantageusement, dans une telle variante, l'une des trois bornes est remplacée par une pince d'embrochage, ou par un fil électrique s'étendant hors du boîtier 30.

Le contact fixe 68 est fixe par rapport au boîtier 30, et est électriquement connecté à la borne d'entrée 62. Le contact mobile 66 est électriquement connecté à la borne de sortie 64. Le contact fixe 68 est disposé dans la direction Z30 par rapport au contact mobile 66.

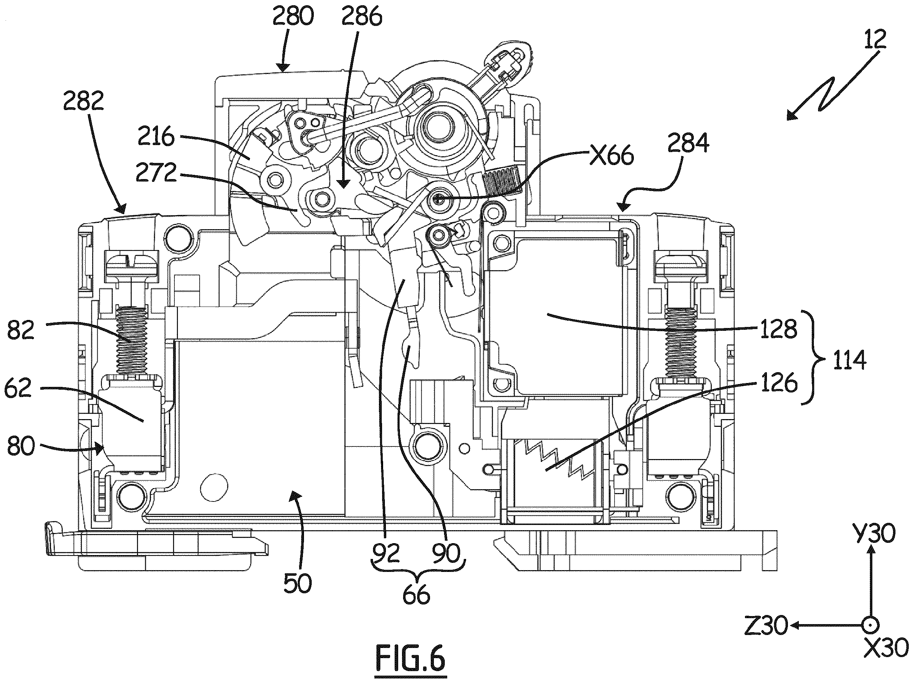

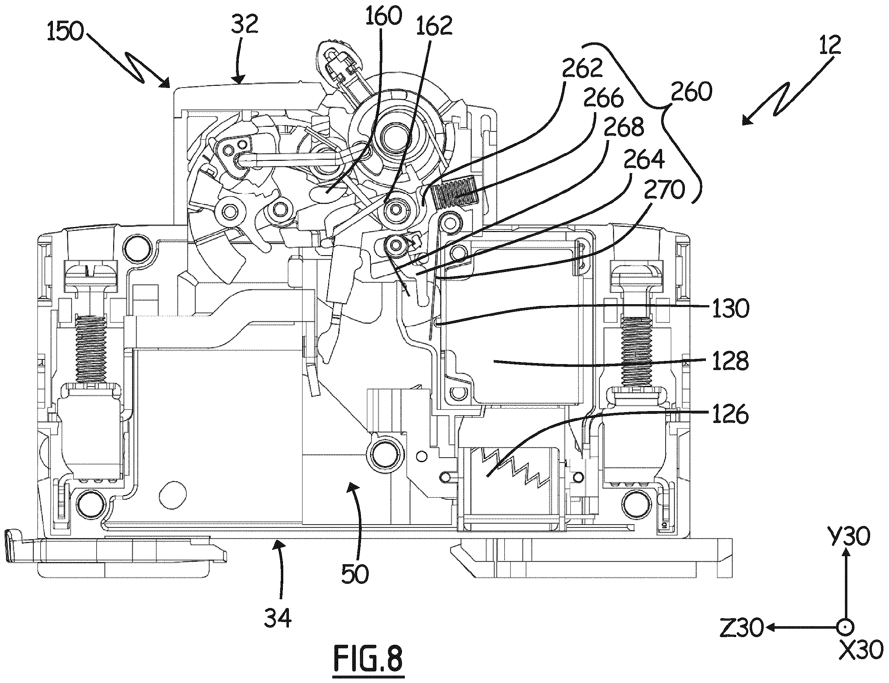

Comme visible sur les figures 3, 6 et 8, le contact mobile 66 comprend préférentiellement une extrémité conductrice 90, assurant la fonction de contact électrique, et qui est électriquement connectée à la borne de sortie 64. Le contact mobile 66 comprend aussi un porte-contact 92, qui porte l'extrémité 90. Le contact mobile 66 est pivotant, par rapport au boîtier 30, par l'intermédiaire du porte-contact 92, autour d'un axe de contact mobile X66, parallèle à la direction X30. Ce pivotement est effectué entre une position de conduction, montrée sur les figures 3 et 8, et une position d'isolement, montrée sur la figure 6.

En position de conduction du contact mobile 66, l'extrémité conductrice 90 est en en contact électrique avec le contact fixe 68, ce qui connecte électriquement la borne d'entrée 62 à la borne de sortie 64. En position d'isolement, l'extrémité 90 du contact mobile 66 est écarté du contact fixe 68, de sorte à en être électriquement isolé, ce qui rompt la connexion électrique entre les bornes 62 et 64, de sorte que les bornes 62 et 64 sont électriquement isolées l'une de l'autre.

Le contact fixe 78 est fixe par rapport au boîtier 30, et est électriquement connecté à la borne d'entrée 72. Le contact mobile 76 est électriquement connecté à la borne de sortie 74. Le contact fixe 78 est disposé dans la direction Z30 par rapport au contact mobile 76.

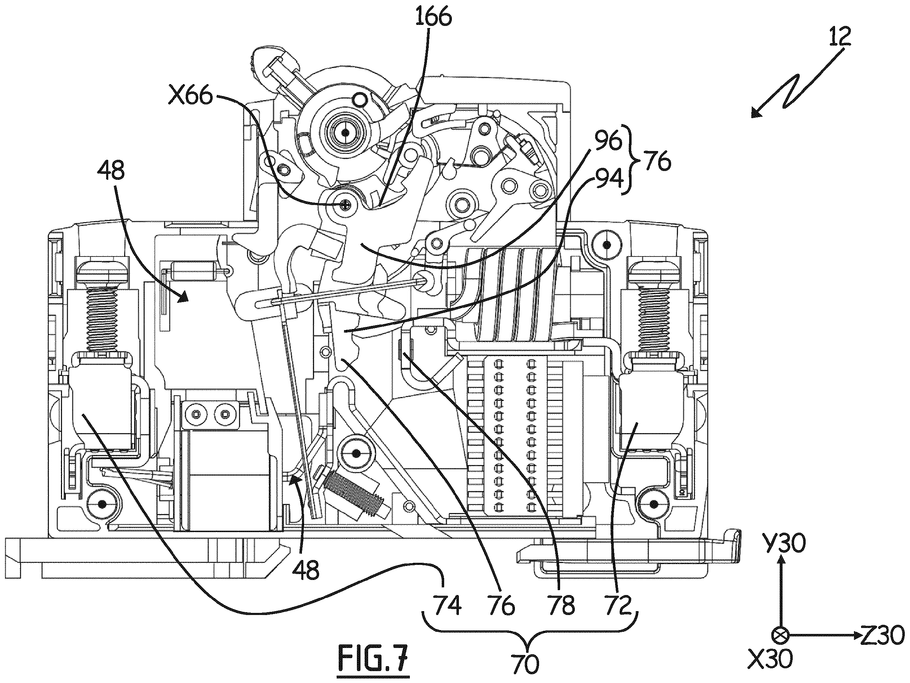

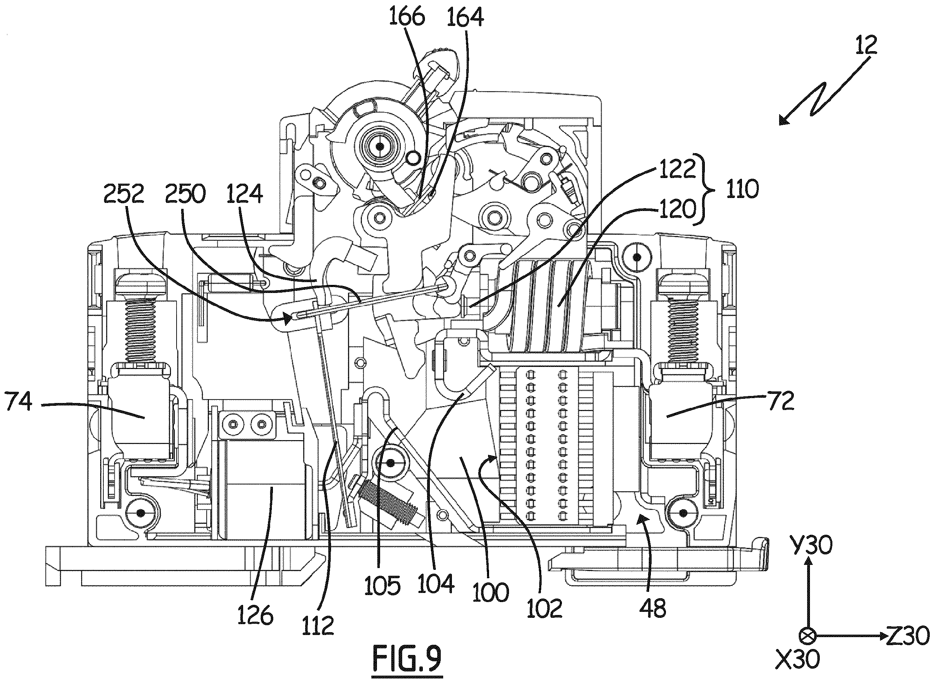

Comme visible sur les figures 7 et 9, le contact mobile 76 comprend préférentiellement une extrémité conductrice 94, assurant la fonction de contact électrique, et qui est électriquement connectée à la borne de sortie 74. Le contact mobile 76 comprend aussi un porte-contact 96, qui porte l'extrémité 94. Le contact mobile 76 est pivotant, par rapport au boîtier 30, par l'intermédiaire du porte-contact 96, autour d'un axe de contact mobile. Dans l'exemple, les axes de contact mobile respectifs des contacts mobiles 66 et 76 sont confondus, c'est-à-dire que le contact mobile 76 est pivotant autour du même axe que le contact mobile 66, autrement dit autour de l'axe X66.

En variante, les axes de contact mobile des contacts 66 et 76 sont parallèles entre eux, non-confondus, et tous deux parallèles à la direction X30.

Le pivotement du contact 76 est effectué entre une position de conduction, montrée sur la figure 5, et une position d'isolement, montrée sur la figure 7.

Les contacts mobiles 66 et 76 sont avantageusement pivotants par rapport au boîtier de façon indépendante. Lorsqu'ils évoluent de leur position de conduction respective à leur position d'isolement respective, les contacts mobiles 66 et 76 tournent avantageusement dans le même sens autour de leur axe de contact mobile respectif, dans l'exemple autour de l'axe X66. En particulier, les extrémités de contact 90 et 94 sont alors déplacées à l'opposé de la direction Z30, c'est-à-dire vers les bornes de sortie 64 et 74, soit vers l'extrémité inférieure 38 du boîtier 30.

En position de conduction du contact mobile 76, l'extrémité conductrice 94 est en en contact électrique avec le contact fixe 78, ce qui connecte électriquement la borne d'entrée 72 à la borne de sortie 74. En position d'isolement, l'extrémité 94 du contact mobile 76 est écarté du contact fixe 78, de sorte à en être électriquement isolé, ce qui rompt la connexion électrique entre les bornes 72 et 74, de sorte que les bornes 72 et 74 sont électriquement isolées l'une de l'autre.

À la figure 9, le contact mobile 76 est montré en position intermédiaire, c'est-à-dire que l'extrémité conductrice 94 est éloignée du contact fixe 78 mais le contact mobile 76 n'est pas en position d'isolement. Cette position s'obtient au cours du basculement du contact mobile 76 depuis sa position de conduction vers sa position d'isolement.

Le dispositif de protection électrique 12 comprend une chambre de coupure 100, qui est représentée complète sur la figure 5, et ouverte partiellement sur les figures 7 et 9, pour en révéler le contenu.

La chambre de coupure 100 vise à conférer un pouvoir de coupure au dispositif 12, en dissipant tout arc électrique qui pourrait se produire lorsque le contact mobile 76 passe de la position de conduction à la position d'isolement, c'est-à-dire lorsqu'il s'éloigne du contact fixe 78.

En pratique, lorsque le contact mobile 76 passe de la position de conduction à la position d'isolement, son extrémité conductrice 94 est située dans la chambre de coupure 100.

La chambre de coupure 100 est avantageusement disposée dans le compartiment de droite 48, entre le contact fixe 78 et la borne d'entrée 72, le long du dos 34 du boîtier 30. La chambre de coupure 100 comporte par exemple un empilement de plaques métalliques 102, parfois appelées ailettes ou séparateurs superposées à distance l'une de l'autre, ici suivant la direction Y30, pour allonger et ainsi éteindre l'arc électrique éventuel. La chambre de coupure 100 comprend avantageusement des joues isolantes, non-représentées, entre lesquelles les plaques 102 sont disposées.

Les plaques 102 sont par exemple maintenues entre la cloison interne 46 et le flanc droit 42 du boîtier 30. La borne d'entrée 72 est interposée entre la chambre de coupure 100 et l'extrémité supérieure 40 du boîtier.

Le contact fixe 78 est préférentiellement prolongé par une corne d'arc 104, recourbée en direction de l'empilement de plaques métalliques 102 de la chambre de coupure 100.

La chambre de coupure comprend avantageusement une corne d'arc 105, qui est électriquement connectée au chemin de conduction 70, entre le contact mobile 76 et la borne de sortie 74. La corne d'arc 105 est disposée en regard de la corne d'arc 104.

Ainsi, lorsque le contact mobile 76 est basculé en position d'isolement, l'arc électrique éventuel est conduit jusqu'aux plaques métalliques 102 par l'intermédiaire des cornes d'arc 104 et 105, pour être divisé et éteint au sein de la chambre de coupure 100.

Le dispositif de protection électrique 12 comprend en outre trois déclencheurs 110, 112 et 114, configurés pour être excités chacun par un défaut électrique d'un type prédéterminé distinct et pour basculer les contacts mobiles 66 et 76 en position d'isolement lorsqu'ils sont excités.

Le déclencheur 110, visible sur les figures 5, 7 et 9, est configuré pour être excité par un défaut électrique de type court-circuit qui est, par exemple, susceptible de se produire entre les chemins de conduction 60 et 70 ou entre le chemin de conduction 70 et la terre. Le déclencheur 110 est donc notamment excité par un court-circuit qui se produirait en aval des bornes de sortie 64 et 74, sur le circuit électrique alimenté au travers du dispositif 12, ou sur l'une de ses charges. En l'occurrence, il s'agit d'un court-circuit phase-neutre, ou phase-terre.

Ici, le déclencheur 110 est disposé dans le compartiment de droite 48, et connecté en série sur le chemin de conduction 70. Suivant la direction Z30, le déclencheur 110 est disposé entre la borne d'entrée 72 et le contact fixe 78. Suivant la direction Y30, le déclencheur 110 est disposé entre la chambre de coupure 100 et la façade 32 du boîtier 30. Suivant la direction X30, le déclencheur 110 est disposé entre le flanc droit 42 du boîtier et la cloison interne 46 du boîtier.

Le déclencheur 110 est parfois appelé déclencheur magnétique. En particulier, le déclencheur 110 se présente sous la forme d'un actionneur magnétique, qui comprend ici un enroulement électromagnétique 120 et un noyau mobile 122. Le noyau 122 est visible seulement sur la figure 9. La borne d'entrée 72 est connectée électriquement au contact fixe 78 par l'intermédiaire du déclencheur 110, en particulier de l'enroulement électromagnétique 120. Lorsqu'un court-circuit se produit entre les chemins de conduction 60 et 70, notamment en aval des bornes de sortie 64 et 74, l'intensité du courant circulant dans l'enroulement 120 devient brutalement très élevée, de sorte à générer un effort électromagnétique suffisant pour déplacer le noyau mobile 122 depuis une position de repos, montrée sur les figures 5 et 7, jusqu'à une position déclenchée, montrée sur la figure 9, par rapport au boîtier 30. Ici, le déplacement du noyau 122 de la position de repos à la position déclenchée est effectuée dans une direction opposée à la direction Z30, c'est-à-dire vers l'extrémité inférieure 38 du boîtier. Une fois que le défaut cesse, l'intensité circulant dans l'enroulement 120 n'est plus suffisamment élevée pour maintenir le noyau 122 en position déclenchée, de sorte que le noyau 122 est avantageusement ramené dans la position de repos, par exemple par un ressort appartenant au déclencheur 110, non représenté.

Lorsque le noyau 122 est déplacé en position déclenchée, il entraîne la rotation des contacts mobiles 66 et 76 depuis leur position de conduction vers leur position d'isolement, interrompant ainsi la circulation d'un courant électrique entre les bornes d'entrée 62 et 72 et les bornes de sortie 64 et 74.

Sur les figures 8 et 9, le dispositif de protection électrique 12 est montré dans une configuration où le déclencheur 110 est en cours de déclenchement, c'est-à-dire lorsque le noyau 122 est en position déclenchée. Sur ces figures, le contact mobile 76 n'est plus en position de conduction et n'a pas encore atteint la position d'isolement illustrée à la figure 7 et le contact mobile 66 n'a pas encore quitté sa position de conduction.

Le déclencheur 112, visible sur les figures 5, 7 et 9, est configuré pour être excité par un défaut électrique d'un autre type prédéterminé, à savoir un défaut électrique de type surcharge, qui est, par exemple, susceptible de se produire entre les chemins de conduction 60 et 70. Le déclencheur 112 est donc notamment excité par une surcharge qui se produirait en aval des bornes de sortie 64 et 74, sur le circuit électrique alimenté au travers du dispositif 12, ou sur l'une de ses charges. Ce type de défaut peut se produire lorsqu'une ou plusieurs charges connectées à ce circuit électrique imposent une demande de courant trop importante.

Ici, le déclencheur 112 est disposé dans le compartiment de droite 48, et connecté en série sur le chemin de conduction 70. Suivant la direction Z30, le déclencheur 112 est disposé entre la borne de sortie 74 et le contact mobile 76. Suivant la direction Y30, le déclencheur 112 est disposé entre le dos 34 et la façade 32 du boîtier 30. Suivant la direction X30, le déclencheur 112 est disposé entre le flanc droit 42 du boîtier et la cloison interne 46 du boîtier.

Le déclencheur 112 est parfois appelé déclencheur thermique. En particulier, le déclencheur 112 se présente sous la forme d'un actionneur thermique, qui est ici formé par un bilame électriquement conducteur et thermo-déformable. Le contact mobile 76 est connecté électriquement à la borne de sortie 74 par l'intermédiaire du déclencheur 112, c'est-à-dire ici via le bilame. De préférence, une tresse souple 124 relie électriquement le contact mobile 76 au déclencheur 112. Lorsqu'une surcharge se produit, notamment en aval des bornes de sortie 64 et 74, l'intensité du courant circulant dans le bilame formant le déclencheur 112 élève la température du bilame jusqu'à causer sa déformation. Une fois que le défaut cesse, le bilame refroidit et reprend sa forme initiale. Le bilame est donc mobile entre une position initiale et une position déformée.

Lorsque le bilame est en position déformée, il entraîne la rotation des contacts mobiles 66 et 76 depuis leur position de conduction vers leur position d'isolement, interrompant ainsi la circulation d'un courant électrique entre les bornes d'entrée 62 et 72 et les bornes de sortie 64 et 74.

Le déclencheur 114 est configuré pour être excité par un défaut électrique d'un autre type prédéterminé, à savoir un défaut électrique de type différentiel, qui est susceptible de se produire entre le chemin de conduction 70 et la terre. Le déclencheur 114 est donc notamment excité par une fuite de courant vers la terre, qui se produirait en aval des bornes de sortie 64 et 74, causant alors une différence entre la valeur de l'intensité du courant circulant au sein du chemin de conduction 70 et la valeur de l'intensité du courant circulant en sens inverse au sein du chemin de conduction 60.

Ici, le déclencheur 114 s'étend à la fois dans les compartiments 48 et 50, en traversant la cloison interne 46. Suivant la direction Z30, le déclencheur 114 est avantageusement disposé entre d'une part, les bornes de sortie 64 et 74, et d'autre part, les contacts fixes 68 et 78 et les contacts mobiles 66 et 76.

Le déclencheur 114 est parfois appelé déclencheur différentiel. De préférence, le déclencheur 114 comprend un capteur différentiel 126, qui s'étend à la fois dans les compartiments 48 et 50, en étant disposé le long du dos 34 du boîtier 30. Comme visible sur les figures 3, 6 et 8, de préférence, le déclencheur 114 comprend aussi un relais 128, qui s'étend seulement dans le compartiment de gauche 50, en étant disposé entre la façade 32 et le capteur différentiel 126.

Le capteur différentiel 126 comprend par exemple un tore ferromagnétique, portant deux enroulements électromagnétiques, l'un formé par le chemin de conduction 60 et l'autre formé par le chemin de conduction 70. L'enroulement électromagnétique du chemin de conduction 60 est avantageusement formé par une partie du chemin 60 entre le contact mobile 66 et la borne de sortie 64. L'enroulement électromagnétique du chemin 70 est avantageusement formé par une partie du chemin 70 qui relie le contact mobile 76 à la borne de sortie 74, plus précisément par une partie du chemin 70 entre le déclencheur 112 et la borne de sortie 74.

Par exemple, le contact mobile 66 et l'enroulement du capteur différentiel 126 du chemin de conduction 60 sont électriquement reliés à l'aide d'une tresse, non représentée. Lorsqu'une différence d'intensité est établie entre les chemins 60 et 70, au-delà d'un certain seuil, un champ électromagnétique est généré au niveau du tore du capteur différentiel 126. Le relais 128 est configuré pour être actionné lorsque ce seuil est dépassé, ce qui a pour effet d'actionner le déplacement d'une tige mobile 130 appartenant au relais 128, depuis une position de repos, montrée sur les figures 3, 6 et 8, jusqu'à une position de déclenchement, non-visible sur les figures, par rapport au boîtier 30. Ici, le déplacement de la tige mobile 130 de la position de repos à la position déclenchée est effectuée suivant la direction Z30, c'est-à-dire vers l'extrémité supérieure 40 du boîtier 30.

Une fois que la tige mobile 130 a atteint la position déclenchée, il convient de la ramener jusqu'à la position de repos pour réarmer le relais 128 et ainsi permettre à nouveau au relais 128 d'actionner la tige 130 en cas de défaut différentiel, comme expliqué ci-après.

Lorsque la tige mobile 130 est déplacé de sa position de repos vers sa position déclenchée, elle entraîne la rotation des contacts mobiles 66 et 76 depuis leur position de conduction vers leur position d'isolement, interrompant ainsi la circulation d'un courant électrique entre les bornes d'entrée 62 et 72 et les bornes de sortie 64 et 74.

Le dispositif de protection électrique 12 comprend également un mécanisme de commutation 150.

Le mécanisme de commutation 150 est logé dans le boîtier 30, en partie dans le compartiment 48 et dans le compartiment 50. Le mécanisme de commutation 150 est configuré pour basculer entre une configuration armée, montrée sur les figures 3 à 5 et 10, dans laquelle le mécanisme 150 met les deux contacts mobiles 66 et 76 en position de conduction, et une configuration déclenchée, montrée sur les figures 6 et 7, dans laquelle le mécanisme de commutation 150 met les contacts mobiles 66 et 76 en position d'isolement.

Dans le présent exemple, le mécanisme de commutation 150 comprend un étrier 152, visible sur les figures 3 à 10. L'étrier 152 est pivotant par rapport au boîtier 30 autour d'un axe d'étrier X152, parallèle à l'axe de contact mobile X66. L'étrier s'étend à la fois dans les compartiments 48 et 50, en étant porté par la cloison interne 46, à cheval sur celle-ci. Lorsque le mécanisme 150 est en configuration armée, l'étrier 152 est dans une première orientation dite « position armée » par rapport au boîtier 30, autour de l'axe X152. Lorsque le mécanisme 150 est en configuration déclenchée, l'étrier 152 est dans une deuxième orientation dite « position déclenchée », autour de l'axe X152. Le mécanisme 150 actionne les contacts mobile 66 et 76 par l'intermédiaire de l'étrier 152.

En pratique, l'étrier 152 comprend une platine 154, disposée dans le compartiment de gauche 50, et une contre-platine 156, disposée dans le compartiment de droite 48.Ainsi, la platine 154 et la contre-platine 156 sont disposées de part et d'autre de la cloison interne 46 et sont pivotantes autour de l'axe d'étrier X152. De plus, la platine 154 et la contre-platine 156 sont fixement reliées par un arbre de liaison 158, de sorte que tout mouvement de rotation de la platine 154 autour de l'axe d'étrier X152 entraîne un mouvement de rotation identique de la contre-platine 156 autour de l'axe d'étrier X152, et inversement.

Comme montré sur les figures 3, 4, 6, 8 et 10, la platine 154 de l'étrier 152 comprend par exemple une came 160, disposé dans le compartiment de gauche 50, par l'intermédiaire duquel l'étrier 152 entraîne le contact mobile 66 du premier chemin de conduction 60 depuis la position de conduction jusqu'à la position d'isolement, lorsque l'étrier 152 est pivoté de la position armée jusqu'à la position déclenchée. Pour entraîner le contact mobile 66 en rotation dans ce sens, la came 160 vient en appui contre le porte-contact 92 du contact mobile 66.

Le mécanisme de commutation 150 comprend avantageusement un ressort 162, dit « ressort de contact », qui est disposé dans le compartiment de gauche 50 en étant en appui à la fois sur la platine 154 de l'étrier 152 et sur le contact mobile 66, plus précisément sur le porte-contact 92. Ainsi, lorsque l'étrier 152 est pivoté depuis la position déclenchée jusqu'à la position armée, l'étrier 152 entraîne le contact 66 de la position d'isolement jusqu'à la position de conduction par l'intermédiaire du ressort 162.

On prévoit que le ressort 162 applique un effort sur le contact 66, en prenant appui sur la platine 154, de préférence sur la came 160, qui tend à mettre en appui le contact mobile 66 contre le contact fixe 68, lorsque l'étrier 152 est en position armée. Cet effort permet d'assurer une pression de contact satisfaisante entre le contact mobile 66 et le contact fixe 68.

Comme montré sur les figures 5, 7 et 9, la contre-platine 156 de l'étrier 152 comprend par exemple une came 164, disposé dans le compartiment de droite 48, par l'intermédiaire duquel l'étrier 152 entraîne le contact mobile 76 du deuxième chemin de conduction 70 depuis la position de conduction jusqu'à la position d'isolement, lorsque l'étrier 152 est pivoté de la position armée jusqu'à la position déclenchée. Pour entraîner le contact mobile 76 en rotation dans ce sens, la came 164 vient en appui contre le porte-contact 96 du contact mobile 76.

Le mécanisme de commutation 150 comprend avantageusement un ressort 166, dit « ressort de contact », qui est disposé dans le compartiment de droite 48 en étant en appui à la fois sur la contre-platine 156 de l'étrier 152 et sur le contact mobile 76, plus précisément sur le porte-contact 96. Ainsi, lorsque l'étrier 152 est pivoté depuis la position déclenchée jusqu'à la position armée, l'étrier 152 entraîne le contact 76 de la position d'isolement jusqu'à la position de conduction par l'intermédiaire du ressort 166.

On prévoit que le ressort de contact 166 applique un effort sur le contact 76, en prenant appui sur la contre-platine 156, de préférence sur la came 164, qui tend à mettre en appui le contact mobile 76 contre le contact fixe 78, lorsque l'étrier 152 est en position armée. Cet effort permet d'assurer une pression de contact satisfaisante entre le contact mobile 76 et le contact fixe 78.

Par exemple, les ressorts de contact 162 et 166 sont des ressorts de torsion, montés respectivement sur le contact mobile 66 et sur le contact mobile 76 et dont une première branche prend respectivement appui sur le contact mobile 66 et sur le contact mobile 76 et dont une deuxième branche prend respectivement appui sur la came 160 et sur la came 164.

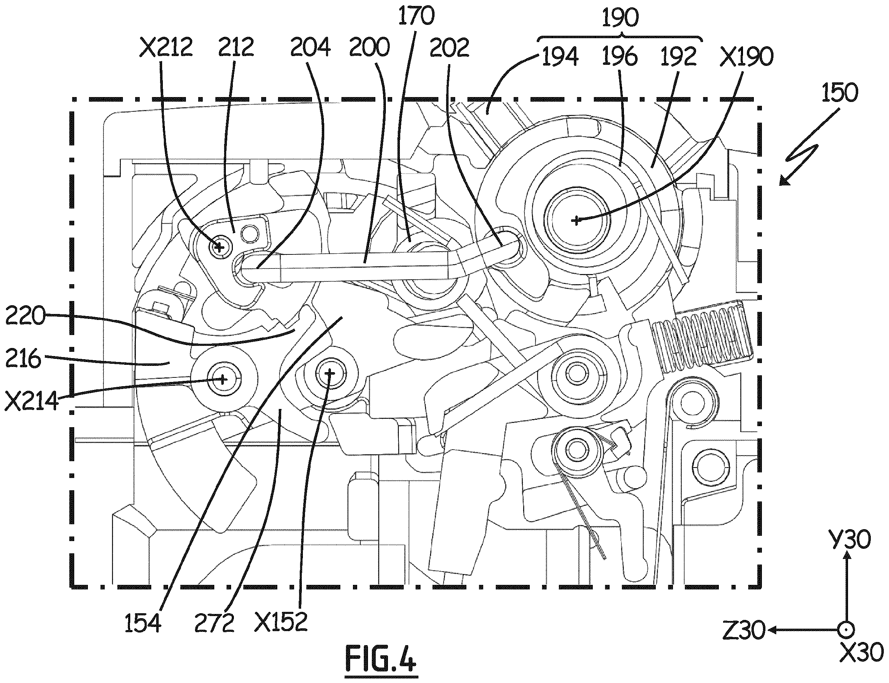

On comprend que les cames 160 et 164 et que les ressorts de contact 162 et 166 transmettent un mouvement de rotation de l'étrier 152 en un mouvement de rotation des contacts mobiles 66 et 76, et que le sens de rotation des contacts mobiles 66 et 76 est opposé au sens de rotation de l'étrier 152. Par exemple, lorsque l'étrier bascule de la position armée à la position déclenchée, il tourne dans le sens horaire, sous l'angle des figures 3 et 4, et entraîne en rotation les contacts mobiles 66 et 76 dans le sens antihoraire, sous l'angle des figures 3 et 4.

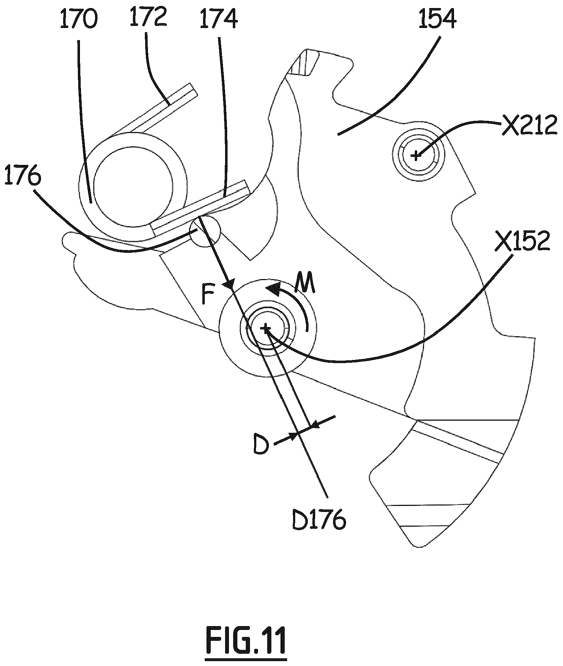

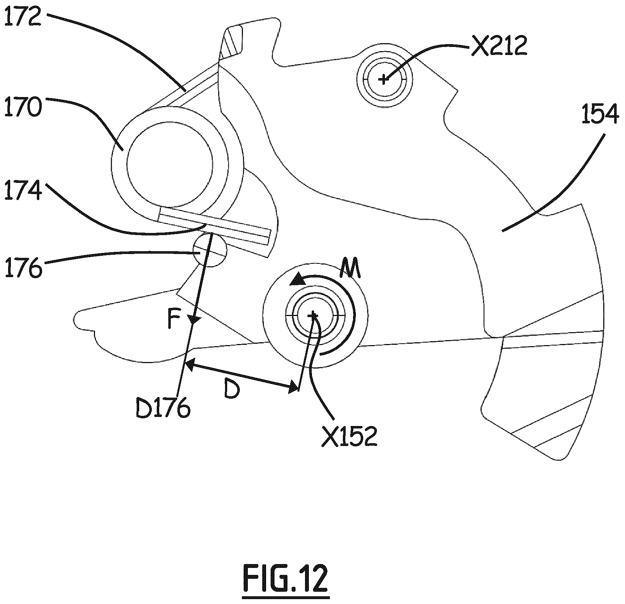

Le mécanisme de commutation 150 comprend en outre un ressort 170, dit « ressort d'étrier », visible sur les figures 3, 4, 6, 8, 10, 11 et 12 et montré seul avec la platine 154 aux figures 11 et 12. Le ressort d'étrier 170 est ici disposé dans le compartiment de gauche 50 du boîtier 30.

Le ressort d'étrier 170 applique un effort sur la platine 154 de l'étrier 152, en prenant appui sur le boîtier 30, qui tend à déplacer l'étrier 152 de la position armée vers la position déclenchée.

Dans l'exemple représenté, le ressort d'étrier 170 est un ressort de torsion, monté sur la cloison interne 46, dont une première branche 172 prend appui contre le boîtier 30 et dont une deuxième branche 174 prend appui contre une butée 176 de la platine 154.

Ainsi, la première branche 172 exerce un effort F sur le boîtier 30 et la deuxième branche 174 exerce un effort sur la butée 176 de la platine.

L'effort F exercé par le ressort d'étrier 170 sur la butée 176 génère un moment M sur la platine 154 qui entraîne sa rotation autour de l'axe d'étrier X152 par un phénomène de bras de levier.

En pratique, l'effort F exercé par la deuxième branche 174 sur la butée 176 est dirigé selon une droite, notée D176, qui est perpendiculaire à la surface de contact entre la deuxième branche et la butée et qui est située dans un plan perpendiculaire à la direction X152.

En outre, la position de la surface de contact évolue dans ce plan, au cours de la rotation de l'étrier de la position armée vers la position déclenchée, de sorte que l'orientation de la droite D176 évolue au cours de la rotation de l'étrier.

L'intensité du moment M généré par le ressort d'étrier 170 sur la platine 154 dépend d'une part de l'intensité de l'effort F exercé par la deuxième branche 174 sur la butée 176 et d'autre part de la distance entre l'axe d'étrier X152 et la droite D176, notée D et mesurée selon un axe perpendiculaire à la droite D176 et passant par l'axe d'étrier X152. En effet, plus cette distance D est importante, plus le bras de levier générant le moment M à partir de la force F est important, car le moment M est égal au produit de la force F par la distance D.

L'étrier 152 est configuré pour que, lorsque l'étrier 152 est pivoté depuis la position armée vers la position déclenchée, la distance D augmente, c'est-à-dire que l'intensité du moment M augmente.

La diminution de l'intensité de l'effort F lorsque le ressort d'étrier 170 se détend est négligeable au regard de l'augmentation de la distance D, qui est relativement importante. Il en résulte que l'intensité du moment M augmente.

L'augmentation du moment M entraînant le pivotement de l'étrier 152 est avantageuse, car elle permet d'augmenter la vitesse de basculement des contacts mobiles 66 et 76 entre leur position de conduction et leur position d'isolement.

Le dispositif de protection électrique 12 comprend également une manette de commutation 190.

La manette de commutation 190 est pivotante, par rapport au boîtier 30, autour d'un axe de manette X190, parallèle à l'axe X30, entre une position de fermeture, montrée sur les figures 3 à 5 et 8 à 10, et une position d'ouverture, montrée sur les figures 6 et 7.

La manette de commutation 190 comprend ici une base 192, par l'intermédiaire de laquelle la manette est attachée au boîtier 30 de façon pivotante. La base 192 est agencée au travers d'une ouverture appartenant à la façade 32, en obturant cette ouverture. Ainsi, la manette de commutation 190 est portée par la façade 32. Dans le sens de l'axe X190, la base 192 s'étend avantageusement de part et d'autre de la cloison interne 46. Autrement dit, la manette 190 est avantageusement centrée suivant la direction X30, sur la façade 32. La manette de commutation 190 comporte un maneton 194, porté par la base 192, et par l'intermédiaire duquel un utilisateur peut actionner la manette 190 en rotation. Pour être accessible par l'utilisateur, le maneton 194 est disposé à l'extérieur du boîtier 30.

Le mécanisme de commutation 150 comprend avantageusement un ressort 196, dit « ressort de manette », visible sur les figures 3, 4, 6, 8 et 10. Le ressort de manette 196 applique un effort sur la manette 190 en prenant appui sur le boîtier 30, qui tend à ramener la manette de la position de fermeture vers la position d'ouverture. Par exemple, le ressort de manette 196 est un ressort de torsion, logé à l'intérieur de la base 192 autour de l'axe de manette X190, et dont une branche prend appui sur la manette 190 et une autre branche prend appui sur la cloison interne 46.

Le mécanisme de commutation 150 comprend avantageusement une bielle 200, visible sur les figures 3, 4, 6, 8 et 10. La bielle 200 est par exemple disposée dans le compartiment de gauche 50. La bielle 200 comprend une première extrémité 202 attachée à la manette 190, en particulier à la base 192. Par l'intermédiaire de cette première extrémité 202, la bielle 200 peut pivoter par rapport à la manette 190, autour d'un axe qui est parallèle et non confondu avec l'axe de manette X190. Ainsi, la rotation de la manette 190 est liée à un mouvement de manivelle de la première extrémité 202 de la bielle 200.

En pratique, au cours de la rotation de la manette 190, la première extrémité 202 de la bielle 200 décrit un arc de cercle centré sur l'axe de manette X190.

La bielle 200 comprend une deuxième extrémité 204, opposée à la première extrémité 202, qui interagit notamment avec l'étrier 152, comme décrit ci-après.

La deuxième extrémité 204 est guidée dans une gorge 206 ménagée dans la platine 154, c'est-à-dire dans un plan parallèle aux directions Y30 et Z30.

Le mécanisme de commutation 150 comprend avantageusement un loquet de verrouillage 210, visible sur les figures 3, 4, 6, 8 et 10. Au moins une partie du loquet de verrouillage 210 est disposée dans le même compartiment que celui de la bielle 200, pour coopérer avec cette dernière, ici le compartiment de gauche 50.

Au moins une partie du loquet de verrouillage 210 s'étend dans le ou les compartiments où sont logés les déclencheurs 110, 112 et 114, pour coopérer mécaniquement avec ces derniers, ici les compartiments 48 et 50. Le loquet 210 est avantageusement porté par l'étrier 152. Le loquet 210 évolue entre une configuration de verrouillage, montrée sur les figures 3 à 5 et 10, et une configuration de déverrouillage, montrée sur les figures 6 à 9.

Comme expliqué ci-après, chaque déclencheur 110, 112 et 114 est configuré pour faire basculer le loquet de verrouillage 210 de la configuration de verrouillage à la configuration de déverrouillage, de façon directe ou indirecte, lorsque ledit déclencheur 110, 112 ou 114 concerné détecte un défaut électrique, du type prédéterminé pour ce déclencheur.

Dans le présent exemple, le loquet 210 comprend un verrou 212 et un crochet 214 qui coopèrent ensemble.

Ici, le crochet 214 s'étend à la fois dans les compartiments 48 et 50, de sorte à être visible sur les figures 3 à 10. En pratique, on prévoit que le crochet 214 s'étend à la fois dans le ou les compartiments recevant les déclencheurs pour être actionné par ces derniers. Le crochet 214 s'étend aussi dans le compartiment où se situe le verrou 212, pour coopérer avec ce dernier. Le crochet 214 est porté par l'étrier 152, en étant pivotant par rapport à l'étrier 152 autour d'un axe X214, nommé « axe de crochet », ici parallèle et non confondu avec l'axe d'étrier X152. Ce pivotement est opéré lorsque le loquet 210 évolue entre les configurations de verrouillage et de déverrouillage.

Dans le présent exemple, le crochet 214 comprend une première partie 216, disposée dans le même compartiment que le verrou 212, et une deuxième partie 218, disposée dans l'autre compartiment. Les première partie 216 et deuxième partie 218 sont fixement reliées l'une à l'autre, de préférence en étant encastrée l'une dans l'autre, de sorte que tout mouvement de la première partie 216 entraîne un mouvement identique de la deuxième partie 218, et inversement.

Ici, le verrou 212 s'étend dans le compartiment de gauche 50, de sorte à être visible sur les figures 3, 4, 6, 8 et 10. En pratique, on prévoit que le verrou 212 s'étend dans le même compartiment que celui de la bielle 200, pour coopérer avec cette dernière. Le verrou 212 est porté par l'étrier 152, en étant pivotant par rapport à l'étrier 152 autour d'un axe X212, nommé « axe de verrou », ici parallèle et non confondu avec l'axe X152. Dans l'exemple, l'axe de verrou X212 est porté par l'arbre de liaison 158 qui relie la platine 154 à la contre-platine 156.

De plus, un trou traversant 213 est ménagé dans le verrou 212.

En configuration de verrouillage, le crochet 214 est dans une orientation dite « orientation de maintien », où le crochet 214 maintient le verrou 212 dans une orientation dite « orientation de capture ». Pour cela, la première partie 216 du crochet 214 comprend par exemple un bras radial 220, contre lequel le verrou 212 vient en butée de rotation. En configuration de déverrouillage, le crochet 214 est dans une orientation dite « orientation de décrochage », où le crochet 214 autorise le verrou 212 à être pivoté par rapport à l'étrier 152. Dans le présent exemple, sous l'angle de la figure 3, le crochet 214 pivote dans le sens horaire pour passer de l'orientation de maintien à l'orientation de décrochage. Lorsque le crochet 214 est déplacé de l'orientation de décrochage à l'orientation de maintien, il ramène et maintient le verrou 212 en orientation de capture.

En d'autres termes, en configuration de verrouillage du loquet de verrouillage 210, le crochet 214 et le verrou 212 sont en contact, de sorte que le verrou 212 est empêché de tourner autour de l'axe de verrou X212 par le crochet 214, alors qu'en configuration de déverrouillage, le crochet 214 et le verrou 212 ne sont pas en contact, de sorte que le verrou 212 n'est pas empêché de pivoter autour de l'axe de verrou X212 par le crochet 214

Le mécanisme de commutation 150 comprend avantageusement un ressort 222, dit « ressort de loquet », visible sur les figures 5, 7 et 9. Ici, le ressort de loquet 222 est prévu dans le compartiment de droite 48. Le ressort 222 applique un effort sur le loquet de verrouillage 210, en prenant appui sur la contre-platine 156 de l'étrier 152, qui tend à ramener le loquet de verrouillage 210 de la configuration de déverrouillage vers la configuration de verrouillage.

Par exemple, le ressort 222 est un ressort de torsion, dont une branche prend appui sur la contre-platine 156 et dont une autre branche prend appui sur la deuxième partie 218 du crochet 214, de sorte que le ressort 222 actionne le loquet 210 par l'intermédiaire du crochet 214. Le ressort de loquet 222 tend à ramener le crochet 214 de l'orientation de décrochage vers l'orientation de maintien.

La deuxième extrémité 204 de la bielle 200 est capturée par le loquet de verrouillage 210, en particulier par le verrou 212, lorsque le loquet 210 est en configuration de verrouillage, ici lorsque le verrou 212 est dans l'orientation de capture. En effet, la deuxième extrémité 204 de la bielle est disposée dans le trou traversant 213 du verrou 212. Alors, par l'intermédiaire du loquet 210, la deuxième extrémité 204 est attachée à l'étrier 152 en étant pivotante par rapport audit étrier 152.

En pratique, lorsque le loquet 210 est en configuration de verrouillage, la deuxième extrémité 204 de la bielle 200 est serrée entre les parois de la gorge 206 de la platine 154 et les parois du trou traversant 213 du verrou 212 et ne peut alors pas se déplacer par rapport à la platine 154 de l'étrier 152 ni par rapport au verrou 212.

Lorsque le loquet 210 est en configuration de déverrouillage, la deuxième extrémité 204 de la bielle 200 est libre de se déplacer dans la gorge 206 de la platine 154, et ce déplacement entraîne une rotation du verrou 212 autour de l'axe de verrou X212.

En configuration de verrouillage du loquet 210, la position de la manette de commutation 190 est assujettie à la position de l'étrier 152, et donc à la position des contacts mobiles 66 et 76, par l'intermédiaire de la bielle 200 et du loquet de verrouillage 210.

Dans cette situation, lorsque la manette de commutation 190 est actionnée de la position d'ouverture à la position de fermeture par un utilisateur, l'étrier 152 est mis en position armée, par l'intermédiaire de la bielle 200, dont la deuxième extrémité 204 est capturée par le loquet 210 pour entraîner l'étrier 152. L'étrier 152 étant mis en position armée, il met les contacts mobiles 66 et 76 en position de conduction, par l'intermédiaire des ressorts de contact 162 et 166.

En configuration de verrouillage du loquet 210, lorsque la manette de commutation 190 est mise dans la position d'ouverture par un utilisateur, l'étrier 152 est mis en position déclenchée, par l'intermédiaire de la bielle 200, dont la deuxième extrémité 204 est capturée par le loquet de verrouillage 210 pour entraîner l'étrier 152. L'étrier étant mis en position déclenchée, il met les contacts 66 et 76 en position d'isolement, par l'intermédiaire des cames 160 et 164 de la platine 154 et de la contre-platine 156.

Lorsque le loquet de verrouillage 210 est en configuration verrouillée, que l'étrier 152 est en position armée et que la manette de commutation 190 est en position de fermeture, l'étrier 152 et la manette de commutation 190 se maintiennent mutuellement en position, à rencontre du ressort d'étrier 170, tendant à déplacer l'étrier 152 vers la position déclenchée, et du ressort de manette 196, tendant à déplacer la manette de commutation 190 vers la position d'ouverture.

Pour ainsi obtenir le maintien mutuel de l'étrier 152 et de la manette de commutation 190 on prévoit que, lorsque le loquet de verrouillage 210 est en configuration verrouillée, que l'étrier 152 est en position armée et que la manette 190 est en position de fermeture, alors la bielle 200 est dans une orientation verrouillante, montrée sur les figures 3 et 4, dans laquelle l'étrier 152 tend à maintenir la manette 190 dans la position de fermeture sous l'action du ressort d'étrier 170, l'étrier 152 étant alors lui-même maintenu en position armée par la manette de commutation 190 via la bielle 200.

Dans le présent exemple, la bielle 200 est dans l'orientation verrouillante lorsque la première extrémité 202 est positionnée dans une direction opposée à la direction Y30 par rapport à une droite, parallèle aux directions Y30 et Z30 et traversant l'axe de manette X190 et la deuxième extrémité 204.

En effet, la rotation de la manette de commutation 190 de la position de fermeture vers la position d'ouverture entraîne un mouvement de la première extrémité 202, dans un plan parallèle aux directions Y30 et Z30, qui décrit un arc de cercle centré sur l'axe de manette X190. Ce mouvement en arc de cercle conduit à un déplacement de la première extrémité 202 dans la direction opposée à la direction Z30, c'est-à-dire vers l'extrémité inférieure 38 du boîtier, tant que la bielle 200 est dans l'orientation verrouillante, puis à un déplacement de la première extrémité 202 dans la direction Z30 lorsque la bielle 200 n'est plus dans l'orientation verrouillante, c'est-à-dire lorsque la première extrémité est positionnée dans la direction Y30 par rapport à une droite, parallèle aux directions Y30 et Z30 et traversant l'axe de manette X190 et la deuxième extrémité 204.

Or, le déplacement de la première extrémité 202 dans la direction opposée à la direction Z30 entraîne un déplacement de la deuxième extrémité 204 dans la même direction. Ainsi, la deuxième extrémité 204 exerce un effort sur les parois de la gorge 206 de la platine 154 ainsi qu'un effort sur les parois du trou traversant 213 du verrou 212. Cet effort sur le verrou 212 tend à faire tourner le verrou 212 autour de l'axe de verrou X212 dans le sens horaire, sous l'angle des figures 3 et 4, ce qui tend à maintenir le loquet de verrouillage 210 en configuration de verrouillage. Ainsi, tant que la manette de commutation 190 est en position de fermeture, la bielle 200 maintien le loquet de verrouillage 210 en configuration de verrouillage.

De plus, cet effort sur la platine 154 tend à faire tourner l'étrier 152 dans le sens antihoraire, sous l'angle des figures 3 et 4, mais cette rotation est empêchée par le ressort d'étrier 170, qui exerce un effort plus important sur la platine 152 tendant à faire tourner l'étrier 152 dans le sens horaire.

Le verrou 212 et l'étrier 152 sont alors empêchés de tourner, ce qui empêche le déplacement de la deuxième extrémité 204 dans la direction opposée à la direction Z30 et ce qui empêche le déplacement de la première extrémité 202.

Ainsi, tant que le loquet 210 est en configuration de verrouillage et que la bielle 200 est dans l'orientation verrouillante, la manette de commutation 190 est empêchée de tourner.

De même, du fait de la position de la deuxième extrémité 204 par rapport à l'axe d'étrier X152, la rotation de l'étrier 152 de la position armée vers la position déclenchée entraîne un déplacement des extrémités 202 et 204 de la bielle 200 dans la direction Z30. Or, lorsque la bielle 200 est dans l'orientation verrouillante, compte-tenu de la position de la première extrémité 202 par rapport à l'axe de manette X190, un mouvement de la première extrémité 202 dans la direction Z30 entraîne une rotation de la manette de commutation 190 dans le sens horaire, sous l'angle des figures 3 et 4, ce qui tend à maintenir la manette en position de fermeture. Le déplacement de la première extrémité 202 est alors empêché, ce qui empêche la rotation de l'étrier 152 de la position armée vers la position déclenchée.

Ainsi, tant que le loquet 210 est en configuration de verrouillage et que la bielle 200 est dans l'orientation verrouillante, l'étrier 152 est empêché de tourner.

En résumé, lorsque le loquet 210 est en configuration de verrouillage et que la bielle 200 est dans l'orientation verrouillante, la manette de commutation 190 et l'étrier 152 se maintiennent mutuellement en position de fermeture et en position armée, par l'intermédiaire de la bielle 200.

Lorsque l'utilisateur actionne un pivotement de la manette de commutation 190 vers la position d'ouverture, la bielle est déplacée dans un premier temps dans la direction opposée à la direction Z30, comme décrit ci-avant, et l'effort d'actionnement fourni par l'utilisateur conduit à exercer un effort sur la platine 154 qui est suffisant pour entraîner la rotation de l'étrier 152 dans le sens antihoraire, sous l'angle des figures 3 et 4, à rencontre de l'effort exercé par le ressort d'étrier 170.

Ainsi, grâce à l'effort d'actionnement de l'utilisateur, la bielle 200 est déplacée depuis son orientation verrouillante jusqu'à ce que la première extrémité 202 soit positionnée dans la direction Y30 par rapport à la droite, parallèle aux directions Y30 et Z30, qui traverse l'axe de manette X190 et la deuxième extrémité 204.

Lorsque la première extrémité 202 est située sur cette droite, et lorsque la première extrémité 202 est agencée dans la direction Y30 par rapport à ladite droite, la bielle 200 n'est plus dans l'orientation verrouillante, de sorte que le maintien en position mutuel entre l'étrier 152 et la manette de commutation 190 n'est plus assuré. Alors, sous l'effet du ressort d'étrier 170, l'étrier 154 est déplacé jusqu'à la position déclenchée et sous l'effet du ressort de manette 196, la manette de commutation 190 est ramenée jusqu'à la position d'ouverture. Lorsque l'étrier 152 est en position déclenchée et que la manette 190 est en position d'ouverture, ils sont maintenus dans ces positions par les ressorts d'étrier 170 et de manette 196.

Ainsi, lorsque la manette de commutation 190 est actionnée par un utilisateur vers la position d'ouverture, le loquet de verrouillage libère l'étrier 152 de sorte que l'étrier bascule vers la position déclenchée.

En résumé, lorsque le loquet de verrouillage 210 est en configuration de verrouillage et que la manette de commutation 190 est en position de fermeture, la manette 190 met le mécanisme de commutation 150 en configuration armée. Lorsque le loquet de verrouillage 210 est en configuration de verrouillage et que la manette 190 est en position d'ouverture, la manette 190 met le mécanisme de commutation 150 en configuration déclenchée.

On comprend en outre que le sens de rotation de la manette de commutation 190 est identique au sens de rotation de l'étrier 152. Par exemple, lorsque la manette de commutation 190 est actionnée vers la position d'ouverture, c'est-à-dire que la manette tourne autour de l'axe de manette X190 dans le sens horaire, sous l'angle des figures 3 et 4, alors l'étrier est basculé en position déclenchée en tournant autour de l'axe d'étrier X152 dans le sens horaire, sous l'angle des figures 3 et 4.

Chaque déclencheur 110, 112 et 114 est individuellement configuré pour déclencher une mise en configuration déclenchée du mécanisme de commutation 150, alors que le mécanisme de commutation 150 était en configuration armée, lorsque ledit déclencheur 110, 112 ou 114 est excité par le défaut électrique du type prédéterminé pour ce déclencheur 110, 112 ou 114. Cela conduit à une mise en position d'isolement des contacts mobiles 66 et 76 par le mécanisme de commutation 150, lorsque le défaut électrique se produit. Pour cela, chaque déclencheur 110, 112 et 114 est conçu pour déclencher un basculement du loquet de verrouillage 210 depuis la configuration de verrouillage, jusqu'à la configuration de déverrouillage.

Lorsque le loquet de verrouillage 210 est en configuration déverrouillée alors que l'étrier 152 est en position armée et que la manette de commutation 190 est en position de fermeture, la deuxième extrémité 204 de la bielle 200 est libre de se déplacer dans la gorge 206 de la platine 154 de l'étrier 152. En effet, lorsque le loquet de verrouillage 210 est en configuration déverrouillée, le verrou 212 est libre de tourner autour de l'axe de verrou X212 et la deuxième extrémité n'est plus serrée entre la gorge 206 et le trou traversant 213 du verrou 212.

Ici, la gorge 206 de la platine 154 forme un chemin circulaire le long duquel la deuxième extrémité 204 de la bielle 200 est autorisée à se déplacer.

Ainsi libérée, la bielle 200 n'opère plus un maintien mutuel en position de l'étrier 152 et de la manette de commutation 190. Alors, la manette 190 est ramenée vers la position d'ouverture sous l'action du ressort de manette 196 et l'étrier 152 est ramené vers la position déclenchée sous l'action du ressort d'étrier 170, l'étrier 152 entraînant alors les contacts mobiles 66 et 76 vers la position d'isolement.

Plus généralement, on prévoit que le mécanisme de commutation 150, en particulier le ressort de manette 196, ramène la manette de commutation 190 vers la position d'ouverture lorsque le mécanisme de commutation 150 est mis dans la configuration déclenchée, que ce soit par action de l'utilisateur sur la manette de commutation 190 elle-même, ou sous l'action d'un déclenchement opéré par l'un des déclencheurs 110, 112 ou 114.

Pour faire passer le loquet de verrouillage 210 de la configuration de verrouillage à la configuration de déverrouillage, le déclencheur magnétique 110 actionne par exemple une bascule 240 appartenant au mécanisme de commutation 150, la bascule 240 entraînant le crochet 214 jusqu'à la position de décrochage. La bascule 240 est visible sur les figures 5, 7 et 9.

Ici, la bascule 240 est attachée au boîtier 30, par exemple à la cloison interne 46, en étant pivotante par rapport au boîtier 30 autour d'un axe de bascule X240 parallèle à l'axe d'étrier X152, entre une position initiale montrée sur les figures 5 et 7, et une position de basculement montrée sur la figure 9.

Le déclencheur magnétique 110 entraîne la bascule 240 de la position initiale à la position de basculement par déplacement du noyau mobile 122, qui vient en appui contre une première extrémité 242 de la bascule 240, ici dans une direction opposée à la direction Z30. La bascule 240 présente une deuxième extrémité 244, qui vient en appui contre une jambe 246 appartenant à la deuxième partie 218 du crochet 214, dans la direction Z30, de sorte que le crochet 214 pivote jusqu'à l'orientation de décrochage sous l'action du pivotement de la bascule 240 jusqu'à la position de basculement, contre l'effort du ressort de loquet 222.

Une fois le défaut électrique terminé, le noyau mobile 122 reprend sa position initiale, et autorise la bascule 240 à être ramenée vers la position initiale, la bascule 240 autorisant ainsi le crochet 214 à être ramené vers l'orientation de maintien. Sous l'action du ressort de loquet 222, la bascule 240 est alors ramenée vers la position initiale par l'intermédiaire de la jambe 246 de la deuxième partie 218 du crochet 214, alors que le crochet 214 est lui-même ramené dans l'orientation de maintien par le ressort de loquet 222.

En outre, pour permettre un basculement plus rapide du contact mobile 76 de sa position de conduction à sa position d'isolement, lorsque le noyau mobile 122 est déplacé de sa position de repos à sa position déclenchée, il vient également impacter le porte-contact 96 du contact mobile 76. Ainsi, sous l'effet de l'impact du noyau mobile 122, le contact mobile 76 est directement déplacé en position d'isolement, sans attendre le pivotement de l'étrier 152. En pratique, le basculement du contact mobile 76 en position d'isolement est plus rapide que le basculement du loquet de verrouillage 210 en position déverrouillée et que le basculement de l'étrier 152 en position déclenchée, de sorte que, lorsque l'étrier bascule en position déclenchée, il entraîne uniquement le basculement du contact mobile 66 en position d'isolement et permet en outre de maintenir le contact mobile 76 en position d'isolement, du fait de l'action de la came 164.

Ce basculement rapide du contact mobile 76 est illustré aux figures 8 et 9, où le dispositif de protection électrique 12 est illustré selon deux angles différents à une même étape du déclenchement du déclencheur magnétique 110. On voit en effet à la figure 8 que le contact mobile 66 est en contact avec le contact fixe 68, alors que à la figure 9, le contact mobile 76 n'est pas en contact avec le contact fixe 78.

Pour faire passer le loquet de verrouillage 210 de la configuration de verrouillage à la configuration de déverrouillage, on peut prévoir que le déclencheur thermique 112 actionne aussi la bascule 240 de la position initiale à la position de bascule, ici par l'intermédiaire d'une biellette 250, appartenant au mécanisme de commutation 150.

Dans l'exemple, la biellette 250 comprend une première extrémité fixée au bilame formant le déclencheur 112 et guidée en translation dans une poche 252 ménagée dans la cloison interne 46 du boîtier 30 et une deuxième extrémité fixée à la première extrémité 242 de la bascule 240. Ainsi, la déformation du bilame sous l'effet d'un défaut électrique conduit à déplacer la biellette 250 dans une direction opposée à la direction Z30, de sorte que la bascule 240 est entraînée de la position initiale à la position de basculement, comme lorsque le noyau mobile 122 du déclencheur magnétique 120 vient en appui sur la première extrémité 242 de la bascule 240.

Pour faire passer le loquet de verrouillage 210 de la configuration de verrouillage à la configuration de déverrouillage, le déclencheur différentiel 114 actionne par exemple un amplificateur mécanique d'effort 260, qui est visible sur les figures 3, 4, 6 et 8, par l'intermédiaire de la tige mobile 130.

L'amplificateur 260 comprend par exemple un tiroir 262, un verrou 264, un ressort de tiroir 266, un ressort de verrou 268 et une béquille de réarmement 270.

Le tiroir 262 coulisse par rapport au boîtier 30 entre une position armée, où le tiroir 262 autorise le loquet de verrouillage 210 à être en configuration de verrouillage, et une position déclenchée, où le tiroir 262 met le loquet 210 en configuration de déverrouillage.

Pour cela, le tiroir 262 vient par exemple en appui contre une jambe 272 appartenant à la première partie 216 du crochet 214, lorsque le tiroir 262 est déplacé de la position armée à la position déclenchée, ce qui entraîne le crochet 214 depuis l'orientation de maintien jusqu'à l'orientation de décrochage. Le ressort de tiroir 266 applique un effort sur le tiroir 262, qui tend à déplacer le tiroir depuis la position armée jusqu'à la position de déclenchement. Lorsque le contact mobile 66 passe de la position de conduction à la position d'isolement, le contact mobile 66 ramène le tiroir 262 jusqu'à la position armée, à l'encontre de l'effort du ressort de tiroir 266, en venant en appui contre le tiroir 262.

Le verrou 264 est porté par la cloison interne 46. Le verrou 264 est pivotant entre une position de verrouillage, montrée sur les figures 3, 4, 6 et 8, où le verrou 264 maintient le tiroir 262 en position armée, contre l'action du ressort de tiroir 266, et une position de déverrouillage, non-visible sur les figures, où le verrou 264 autorise le tiroir 262 à être déplacé de la position armée à la position déclenchée par le ressort de tiroir 266, et à être ramené de la position déclenchée à la position armée par le contact mobile 66.

Le ressort de verrou 268 exerce un effort sur le verrou 264, en prenant appui sur la cloison interne 46 du boîtier 30, qui tend à ramener le verrou 264 de la position de déverrouillage vers la position de verrouillage. La béquille de réarmement 270 est portée par le boîtier 30, en particulier par la cloison interne 46, et s'étend entre le verrou 264 et la tige mobile 130 du déclencheur 114.

Lorsqu'un défaut différentiel se produit, la tige mobile 130 est déplacée, ici dans la direction Z30. Sous l'action du déplacement de la tige mobile 130, la béquille de réarmement 270 est pivotée entre une première position, montrée sur les figures 3, 4, 6 et 8, et une deuxième position, non-visible sur les figures. Dans ce pivotement, la béquille 270 entraîne le verrou 264 de sa position de verrouillage jusqu'à la position de déverrouillage, contre l'action du ressort de verrou 268. Le verrou 264 étant en position de déverrouillage, le tiroir 262 est autorisé à être déplacé de la position armée jusqu'à la position déclenchée, sous l'action du ressort de tiroir 266, et vient appuyer sur la jambe 272 du crochet 214, ce qui fait pivoter le crochet 214 depuis l'orientation de maintien jusqu'à l'orientation de décrochage. Ce faisant, le tiroir 262 fait basculer le loquet de verrouillage 210 de la configuration de verrouillage à la configuration de déverrouillage. Libéré, l'étrier 152 fait basculer les contacts mobiles 66 et 76 de la position de conduction à la position d'isolement, en basculant lui-même de la position armée à la position déclenchée. Au cours de son pivotement vers la position d'isolement, le contact 66 vient en appui contre le tiroir 262 de sorte à ramener le tiroir 262 vers la position armée, contre l'action du ressort de tiroir 266. Ce faisant, le tiroir 262 entraîne la béquille de réarmement 270 jusqu'à la première position. De ce fait, la tige mobile 130 est ramenée par la béquille 270 jusqu'à sa position initiale, de sorte que le déclencheur différentiel 114 est réarmé. Au cours du déplacement du tiroir 262 vers la position armée, le tiroir 262 autorise le verrou 264 à être ramené jusqu'à la position de verrouillage par le ressort de verrou 268, de sorte que le verrou 264 maintien le tiroir 262 en position armée. Dans cette situation, l'amplificateur mécanique 260 et le déclencheur différentiel 114 sont revenus dans leur configuration d'origine, pour permettre un nouveau déclenchement si un nouveau défaut survient. À ce moment-là, l'étrier 152 est en position déclenchée, les contacts mobiles 66 et 76 sont en position d'isolement et la manette de commutation 190 est en position d'ouverture.

Le mécanisme de commutation 150 décrit ici et son mode de déclenchement par les déclencheurs 110, 112 et 114 est donné seulement à titre d'exemple illustratif.

Avantageusement, le déclencheur magnétique 110 et le déclencheur thermique 112 peuvent être considérés comme un seul déclencheur, alors appelé «déclencheur magnétothermique », qui fait basculer le mécanisme de commutation 150 en configuration déclenchée lorsqu'un défaut électrique de type court-circuit ou surcharge de produit, en agissant sur la bascule 240.

Avantageusement, le fait que l'étrier 152 tourne dans un sens opposé aux contacts mobiles 66 et 76 permet de positionner le déclencheur magnétique 110 dans la partie supérieure du boîtier 30, en pratique au plus proche de l'extrémité supérieure 40 du boîtier. En effet, le positionnement du déclencheur magnétique est contraint par le sens de rotation du contact mobile 76, car la direction de sortie du noyau mobile 122 du déclencheur magnétique doit correspondre à la direction de déplacement du contact mobile 76, le contact mobile étant entraîné par le noyau mobile 122 lorsque le déclencheur magnétique 110 est excité par un défaut électrique.

La répartition interne des éléments compris dans le dispositif de protection électrique 12 se résume comme suit :
Les bornes d'entrée 62, 72 sont disposées dans la direction Z30 par rapport aux bornes de sortie 64, 74, c'est-à-dire au-dessus des bornes de sortie 64, 74, et au plus proche du peigne d'alimentation 18 en configuration montée du dispositif sur le tableau électrique 10.

Les contacts fixes 68, 78 sont disposés, selon la direction de hauteur Z30, entre les bornes de sortie 64, 74 et les bornes d'entrée 62, 72.

Les contacts mobiles 66, 76 sont disposés, selon la direction de hauteur Z30, entre les contacts fixes 68, 78 et les bornes d'entrée 62, 72.

Le mécanisme de commutation 150 est disposé, selon la direction de hauteur Z30, entre les bornes de sortie 64, 74 et les bornes d'entrée 62, 72 et, selon la direction de profondeur Y30, entre le dos 34 et la façade 32 du boîtier 30. En outre, le mécanisme de commutation est disposé partiellement dans les deux compartiments 48 et 50, de part et d'autre de la cloison interne 46.

La manette de commutation 190 est disposée, selon la direction de profondeur Y30, entre le mécanisme de commutation 150 et la façade 32.

Le déclencheur magnétique 110 est disposé, selon la direction de hauteur Z30, entre les contacts mobiles 66, 76 et les bornes d'entrée 62, 72, selon la direction de profondeur Y30, entre le dos 34 et le mécanisme de commutation 150, et selon la direction de largeur X30, entre le flanc droit 42 et la cloison interne 46 du boîtier 30, c'est-à-dire dans le compartiment de droite 48.

Avantageusement, la chambre de coupure 100 est disposée, selon la direction de hauteur Z30, entre les contacts mobiles 66, 76 et les bornes d'entrée 62, 72, selon la direction de profondeur Y30, entre le dos 34 et le déclencheur magnétique 110, et selon la direction de largeur X30, entre le flanc droit 42 et la cloison interne 46 du boîtier 30, c'est-à-dire dans le compartiment de droite 48. La chambre de coupure 100 et le déclencheur magnétique 110 sont donc situés au même niveau selon la direction de hauteur Z30 et dans le même compartiment.

Avantageusement, le déclencheur thermique 112 est disposé, selon la direction de hauteur Z30, entre les bornes de sortie 64, 74 et les contacts mobiles 66, 76, dans la direction de profondeur Y30, entre le dos 34 du boîtier 30 et le mécanisme de commutation 150, et selon la direction de largeur X30, entre le flanc droit 42 et la cloison interne 46 du boîtier 30, c'est-à-dire dans le compartiment de droite 48. Le déclencheur thermique 112 est donc disposé dans le même compartiment que la chambre de coupure 100 et que le déclencheur magnétique 110.

Avantageusement, le déclencheur différentiel 114 est disposé, selon la direction de hauteur Z30, entre les bornes de sortie 64, 74 et le déclencheur thermique 112, et, dans la direction de profondeur Y30, entre le dos 34 et la façade 32. Selon la direction de largeur X30, le déclencheur différentiel 114 est disposé entre le flanc droit 42 et le flanc gauche 44, c'est-à-dire qu'il est partiellement situé dans les deux compartiments 48 et 50. En pratique le relais différentiel 128 est entièrement disposé dans le compartiment de gauche 50 et le capteur différentiel 126 est disposé dans les deux compartiments, dans une ouverture ménagée dans la cloison interne 46.

On remarque que la façade 32 du boîtier 30 comprend une partie centrale 280, qui est plus avancée, dans la direction Y30, qu'une partie supérieure 282 et qu'une partie inférieure 284, située respectivement, dans la direction Z30, au-dessus et en-dessous de la partie centrale 280. Cette avancée de la partie centrale 280 définit un volume d'avancée 286.

Avantageusement, le volume d'avancée 286 comprend uniquement la manette de commutation 190 et une partie du mécanisme de commutation 150. En pratique, le volume d'avancée 286 comprend notamment l'étrier 152 et le loquet de verrouillage 210. Ainsi, les déclencheurs 110, 112 et 114 sont disposés, selon la direction de profondeur Y30, entre d'une part le dos 34 du boîtier et d'autre part la partie supérieure 282, la partie inférieure 284 et le volume d'avancée 286. En outre, les contacts mobiles 66 et 76 s'étendent depuis le volume d'avancée 286, où est situé l'axe de contact mobile X66, en direction du dos 34, selon une direction opposée à la direction Y30.

Le déclencheur différentiel 114 constitue, pour le dispositif de protection électrique 12, un composant fonctionnel qui est remplaçable par un autre composant fonctionnel proposant une fonction différente.

Au sein du dispositif de protection électrique 12, on distingue ainsi d'une part un composant fonctionnel, qui est dans l'exemple représenté le déclencheur différentiel 114, et d'autre part un module principal, noté 300, qui comprend avantageusement, dans l'exemple représenté, les chemins de conduction 60 et 70, la chambre de coupure 100, le déclencheur magnétique 110, le déclencheur thermique 112, le mécanisme de commutation 150 et la manette de commutation 190.

En variante, le déclencheur 114 est remplacé par un autre composant fonctionnel qui est un déclencheur configuré pour être excité par un défaut électrique d'un type prédéterminé autre que les défauts électriques précités, tel que par exemple un arc électrique se produisant sur une installation connectée aux bornes de sortie 64 et 74, ou encore un déclencheur configuré pour être commandé par un système de communication, par exemple pour être déclenché lorsqu'un signal d'ouverture est communiqué.

En variante, le déclencheur 114 est remplacé par un autre composant fonctionnel qui est un système de surveillance. Un tel système de surveillance est en pratique un système de suivi configuré pour mesurer des grandeurs physiques représentatives du fonctionnement du dispositif de protection et/ou pour détecter l'état de fonctionnement du dispositif de protection. Avantageusement, un tel système de surveillance est configuré pour communiquer des informations avec un système d'information distant. Par exemple, un tel système de surveillance permet de compter le nombre de basculement de l'étrier 152 de la position armée à la position déclenchée, ou de suivre la consommation d'une installation connectée aux bornes de sortie 64 et 74. Lorsque le déclencheur 114 est remplacé par un tel système de surveillance, le mécanisme de commutation 150 ne comprend pas d'amplificateur mécanique d'effort 260.

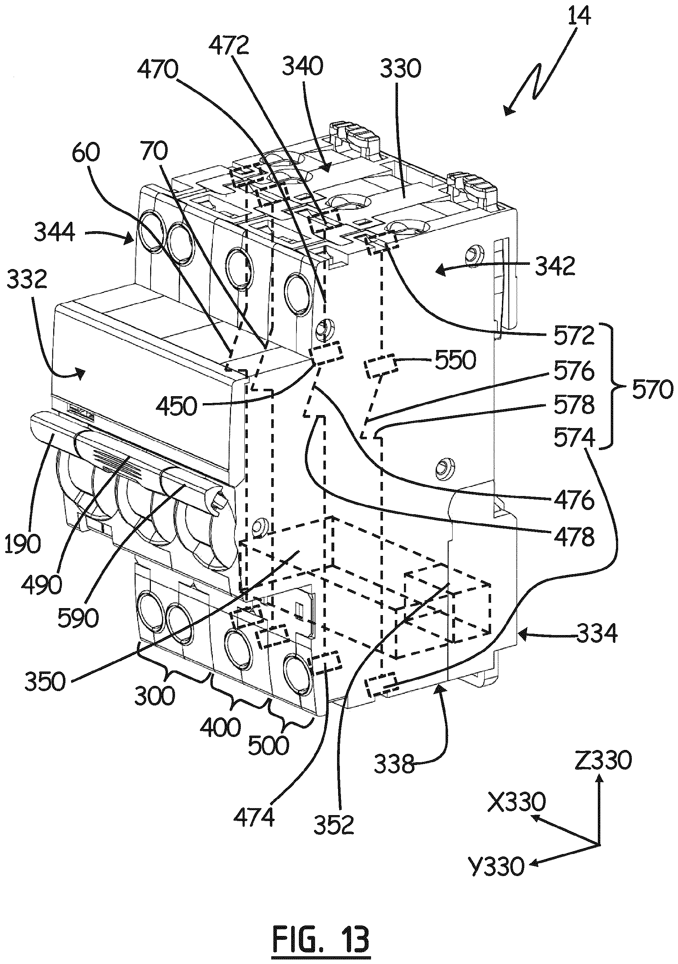

On décrit à présent plus en détail, et en référence à la figure 13, l'un des dispositifs de protection électrique 14 de la figure 1. Le dispositif 14 est conforme à un autre mode de réalisation conforme à l'invention. Dans le dispositif 14, les éléments analogues à ceux du dispositif 12 portent les mêmes références et fonctionnent de la même façon. Dans ce qui suit, on décrit principalement les différences entre le dispositif 14 et le dispositif 12.

Le dispositif 14 comprend un boîtier 330. On définit une direction de largeur X330, une direction de profondeur Y330 et une direction de hauteur Z330 du boîtier 330, qui sont perpendiculaires entre elles et fixes par rapport au boîtier 330.

Le boîtier 330 constitue une enveloppe essentiellement fermée et électriquement isolante. Le boîtier 330 comprend avantageusement une façade 332 et un dos 334, répartis suivant la direction de profondeur Y330, avec la façade 332 dans la direction Y330 par rapport au dos 334.

Le boîtier 330 comprend avantageusement une extrémité inférieure 338 et une extrémité supérieure 340 réparties suivant la direction Z330, avec l'extrémité supérieure 340 dans la direction Z330 par rapport à l'extrémité inférieure 338, l'extrémité supérieure 340 étant disposée au-dessus de l'extrémité inférieure 338 en configuration montée du dispositif 14 sur le tableau électrique 10.

Le boîtier 330 comprend avantageusement un flanc droit 342 et un flanc gauche 344, préférentiellement plans et parallèles, répartis suivant la direction X330, avec le flanc gauche 344 dans la direction X330 par rapport au flanc droit, le flanc gauche 344 étant disposé à gauche du flanc droit 342 en configuration montée du dispositif 14 sur le tableau électrique 10.

Avantageusement, la largeur du dispositif 14, mesurée selon la direction X330 entre le flanc droit 342 et le flanc gauche 344, est comprise entre 50 mm et 60 mm, de préférence égale à 54 mm.

Lorsque le dispositif 14 est monté sur le tableau électrique 10 en étant fixé au rail 16, la direction X330 est parallèle au rail 16 et à l'axe X10, la direction Y330 est parallèle à l'axe Y10 et la direction Z330 est parallèle à l'axe Z10.

Le dispositif 14 comprend un module principal 300, identique au module principal 300 du dispositif de protection électrique 12.

Le module 300 est disposé dans le boîtier 330 de sorte que les bornes d'entrées 62 et 72 des chemins de conduction 60 et 70 sont disposées à l'extrémité supérieure 340 et de sorte que les bornes de sortie 64 et 74 sont disposées à l'extrémité inférieure 338.

Le dispositif 14 comprend en outre un premier module auxiliaire 400 et un deuxième module auxiliaire 500.

Le premier module auxiliaire 400 comprend un chemin de conduction 470 comprenant une borne d'entrée 472, une borne de sortie 474, un contact mobile 476 et un contact fixe 478.

Le deuxième module auxiliaire 500 comprend un chemin de conduction 570 comprenant une borne d'entrée 572, une borne de sortie 574, un contact mobile 576 et un contact fixe 578.

Les chemins de conduction 470 et 570 fonctionnent de manière analogue au chemin de conduction 70 du dispositif 12. Ils sont représentés de manière schématique à la figure 13.

Ainsi, les contacts mobiles 476 et 576 sont mobiles en rotation entre une position de conduction et une position d'isolement. Les contacts mobiles 476 et 576 sont basculés respectivement par des mécanismes de commutation 450 et 550, dont le fonctionnement est analogue au fonctionnement du mécanisme de commutation 150 du dispositif 12.

En outre, le premier module auxiliaire 400 comprend une manette de commutation 490 et le deuxième module auxiliaire 500 comprend une manette de commutation 590, les manettes 490 et 590 étant analogues à la manette de commutation 190 du dispositif 12.

Avantageusement, les manettes de commutation 190, 490 et 590 sont mécaniquement liées de sorte que l'actionnement d'une des trois manettes entraîne l'actionnement des deux autres manettes. Ainsi, les mécanismes de commutation du module principal 300 et des modules auxiliaire 400 et 500 sont liés, de sorte que le basculement de l'un des mécanismes d'une configuration à une autre configuration, par exemple de la configuration armée à la configuration déclenchée, entraîne le basculement des deux autres modules auxiliaires, de sorte que à chaque instant, les contacts mobiles 66, 76, 476 et 576 sont tous soit en position de conduction, soit en position d'isolement. En pratique, toutes les manettes de commutation sont donc mobiles en rotation autour de l'axe de manette X190.

Le dispositif 14 comprend au total quatre bornes d'entrées 62, 72, 472 et 572 et quatre bornes de sortie 64, 74, 474 et 574.

De plus, chaque chemin de conduction constitue un pôle distinctif du dispositif 14. De préférence, le chemin 60 constitue un pôle de neutre alors que les chemins 70, 470 et 570 constituent des pôles de phase. Ainsi, le chemin 60 est relié à un conducteur de neutre du tableau électrique par l'intermédiaire d'un connecteur 20 et les chemins 70, 470 et 570 sont relié à trois phases d'alimentation du tableau électrique par l'intermédiaire de trois connecteurs 20. Autrement dit, chaque chemin de conduction est prévu pour être porté à un potentiel distinct. De préférence, le dispositif 14 est conçu pour être utilisé sous une basse tension, c'est-à-dire une tension comprise entre 100V (Volts) et 600V, par exemple une tension de 240V.

Les modules auxiliaire 400 et 500 comprennent chacun un déclencheur auxiliaire, non-visible sur la figure 13, qui est disposé dans le boîtier et qui est configuré pour faire basculer les mécanismes de commutation 450 et 550 en configuration déclenchée sous l'effet d'un défaut électrique.

Avantageusement, les déclencheurs auxiliaires sont des déclencheurs magnétiques, thermiques, ou magnétothermiques.

Le module principal 300 et les modules auxiliaire 400 et 500 sont répartis selon la direction de largeur X330. De préférence, le module principal 300 est disposé contre un flanc du boîtier 300, dans l'exemple contre le flanc gauche 344. Ainsi, l'un des modules auxiliaire 400 et 500 est disposé contre un flanc du boîtier et l'autre module auxiliaire est disposé au centre du boîtier. Dans l'exemple , le module auxiliaire 500 est disposé contre le flanc droit 342 et le module auxiliaire 400 est disposé entre le module principal 300 et le module auxiliaire 500.

Avantageusement, le module principal 300 et les modules auxiliaire 400 et 500 sont électriquement isolés par des parois internes du boîtier 300, non-visibles à la figure 13.

Le dispositif de protection électrique 14 comprend en outre un composant fonctionnel, tel que par exemple un déclencheur différentiel 350, un déclencheur configuré pour être excité par un défaut électrique d'un type prédéterminé autre que les défauts électriques précités, tel que par exemple un arc électrique se produisant sur une installation connectée aux bornes de sortie 64 et 74, ou encore un déclencheur configuré pour être commandé par un système de communication, par exemple pour être déclenché lorsqu'un signal d'ouverture est communiqué. Le composant fonctionnel peut également être un système de surveillance 352, qui est en pratique un système de suivi configuré pour mesurer des grandeurs physiques représentatives du fonctionnement du dispositif de protection et/ou pour détecter l'état de fonctionnement du dispositif de protection. Avantageusement, un tel système de surveillance est configuré pour communiquer des informations avec un système d'information distant. Par exemple, un tel système de surveillance permet de compter le nombre de basculement de l'étrier 152 de la position armée à la position déclenchée. Dans l'exemple représenté à la figure 13, le composant fonctionnel comprend un déclencheur différentiel 350 et un système de surveillance 352.

Avantageusement, le composant fonctionnel s'étend sur toute la largeur du boîtier 330, entre le flanc droit 342 et le flanc gauche 344, comme représenté schématiquement à la figure 13. Ainsi, le composant fonctionnel est adjacent aux bornes de sortie 64, 74, 474 et 574.

Cette position du composant fonctionnel est particulièrement avantageuse, car elle permet de facilement adapter les dimensions du boîtier 330 aux dimensions du composant fonctionnel. Par exemple, si le composant fonctionnel est particulièrement encombrant, il est possible d'augmenter les dimensions du boîtier 330 selon sa direction de hauteur Z330, en déplaçant sont extrémité inférieure 338 en direction opposée à la direction Z330.

En variante, le dispositif de protection électrique 14 comprend un nombre différent de chemins de conduction, par exemple un seul chemin de conduction, deux chemins de conduction ou trois chemins de conduction. Lorsque le dispositif de protection électrique 14 comprend un seul chemin de conduction, ce chemin de conduction est avantageusement le chemin de conduction 70, c'est-à-dire le pôle de phase. Lorsque le dispositif de protection électrique 14 comprend deux chemins de conduction, ces chemins de conduction sont avantageusement deux pôles de phase, ou un pôle de phase et un pôle de neutre. Lorsque le dispositif de protection électrique 14 comprend trois chemins de conduction, ces chemins de conduction sont avantageusement deux pôles de phase et un pôle de neutre, ou trois pôles de phase.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Dispositif de protection électrique (14) comprenant :
- un boîtier (330), par l'intermédiaire duquel le dispositif de protection électrique est configuré pour être monté sur un rail (16) appartenant à un tableau électrique (10),
- un module principal (300), comprenant :
∘ au moins un chemin de conduction (70), comprenant :
▪ une borne d'entrée (72), disposée à une extrémité supérieure (340) du boîtier pour être connectée à un peigne d'alimentation (18), appartenant au tableau électrique ;
▪ une borne de sortie (74), disposée à une extrémité inférieure (338) du boîtier ; et
▪ un contact mobile (76), qui est mobile en rotation par rapport au boîtier, entre une position de conduction, dans laquelle le contact mobile connecte électriquement la borne d'entrée à la borne de sortie de ce chemin de conduction, et une position d'isolement, dans laquelle la borne d'entrée et la borne de sortie dudit chemin de conduction sont électriquement isolées l'une de l'autre,
∘ un mécanisme de commutation (150) qui est configuré pour basculer entre une configuration armée, dans laquelle le mécanisme de commutation met le contact mobile en position de conduction, et une configuration déclenchée, dans laquelle le mécanisme met le contact mobile en position d'isolement,
∘ une chambre de coupure (100), pour dissiper un arc électrique produit lorsque le contact mobile (76) passe de la position de conduction à la position d'isolement,
∘ un premier déclencheur (110), qui est disposé dans le boîtier et qui est configuré pour faire basculer le mécanisme de commutation en configuration déclenchée sous l'effet d'un défaut électrique d'un premier type, et
∘ une manette de commutation (190) :
▪ mobile en rotation autour d'un axe de manette (X190) ;
▪ actionnable par un utilisateur entre une position de fermeture, pour mettre le mécanisme de commutation en une position armée, et une position d'ouverture, pour mettre le mécanisme de commutation en configuration déclenchée ; et
▪ actionnable par le mécanisme de commutation depuis sa position de fermeture jusqu'à sa position d'ouverture, lorsque le mécanisme de commutation est basculé en configuration déclenchée sous l'effet du premier déclencheur,
**caractérisé en ce que** le dispositif de protection électrique (14) comprend en outre :
- un premier module auxiliaire (400) et un deuxième module auxiliaire (500), chaque module auxiliaire comprenant individuellement :
∘ un chemin de conduction (470, 570) comprenant :
▪ une borne d'entrée (472, 572), disposée à une extrémité supérieure (340) du boîtier (300) pour être connectée à un peigne d'alimentation (18), appartenant au tableau électrique (10) ;
▪ une borne de sortie (474, 574), disposée à une extrémité inférieure (338) du boîtier ; et
▪ un contact mobile (476, 576), qui est mobile en rotation par rapport au boîtier, entre une position de conduction, dans laquelle le contact mobile connecte électriquement la borne d'entrée à la borne de sortie de ce chemin de conduction, et une position d'isolement, dans laquelle la borne d'entrée et la borne de sortie dudit chemin de conduction sont électriquement isolées l'une de l'autre,
∘ un mécanisme de commutation (450, 550) qui est configuré pour basculer entre une configuration armée, dans laquelle le mécanisme de commutation met le contact mobile en position de conduction, et une configuration déclenchée, dans laquelle le mécanisme met le contact mobile en position d'isolement,
∘ un déclencheur auxiliaire, qui est disposé dans le boîtier et qui est configuré pour faire basculer le mécanisme de commutation en configuration déclenchée sous l'effet d'un défaut électrique d'un premier type, et
∘ une manette de commutation (490, 590) :
▪ mobile en rotation autour de l'axe de manette (X190) ;
▪ actionnable par un utilisateur entre une position de fermeture, pour mettre le mécanisme de commutation en une position armée, et une position d'ouverture, pour mettre le mécanisme de commutation en configuration déclenchée ; et
▪ actionnable par le mécanisme de commutation depuis sa position de fermeture jusqu'à sa position d'ouverture, lorsque le mécanisme de commutation est basculé en configuration déclenchée sous l'effet du déclencheur auxiliaire,
la manette de commutation (190) du module principal (300), la manette de commutation (490) du premier module auxiliaire (400) et la manette de commutation (590) du deuxième module auxiliaire (500) étant mécaniquement liées de sorte que l'actionnement d'une des trois manettes entraîne l'actionnement des deux autres manettes et le basculement des mécanismes de commutation (150, 450, 550) du module principal, du premier module auxiliaire et du deuxième module auxiliaire,
- un composant fonctionnel, qui est choisi parmi :
∘ un deuxième déclencheur (350) configuré pour faire basculer les mécanismes de commutation (150, 450, 550) du module principal (300) et des modules auxiliaires (400, 500) en configuration déclenchée sous l'effet d'un défaut électrique d'un deuxième type, et
∘ un système de surveillance (352),
**en ce que** le premier déclencheur (110) et la chambre de coupure (100) du module principal (300) sont adjacents à la borne d'entrée (72) du chemin de conduction (70) du module principal, de sorte à être disposés entre ladite borne d'entrée et le composant fonctionnel, **en ce que** le premier module auxiliaire (400) et le deuxième module auxiliaire (500) sont juxtaposés au module principal (300), selon une direction de largeur (X330) du boîtier (330), et **en ce que** le composant fonctionnel s'étend sur toute la largeur du boîtier et est adjacent aux bornes de sortie (74, 474, 574) du module principal et des modules auxiliaires.

2. Dispositif de protection électrique (14) selon la revendication 1, dans lequel le premier déclencheur (110) est un déclencheur magnétique (110), disposé dans le boîtier (330) entre la borne d'entrée (72) et le contact mobile (76) du module principal (300) et configuré pour faire basculer le mécanisme de commutation (150) du module principal en configuration déclenchée lorsque le défaut électrique du premier type est un court-circuit se produisant en aval de la borne de sortie (74) du module principal.

3. Dispositif de protection électrique (14) selon l'une quelconque des revendications précédentes, dans lequel le module principal (300) comprend en outre un déclencheur thermique (112), disposé dans le boîtier (330) entre le contact mobile (76) et la borne de sortie (74) du module principal et qui fait basculer le mécanisme de commutation (150) du module principal en configuration déclenchée lorsque le défaut électrique du premier type est une surcharge se produisant en aval de la borne de sortie (74).

4. Dispositif de protection électrique (14) selon l'une quelconque des revendications précédentes, dans lequel le composant fonctionnel est un deuxième déclencheur (350), qui est choisi parmi :
- un déclencheur différentiel (350) configuré pour faire basculer le mécanisme de commutation (150, 450, 550) du module principal (300) et des modules auxiliaires (400, 500) en configuration déclenchée lorsque le défaut électrique du deuxième type est un courant différentiel ;
- un déclencheur commandé par un système de communication ; et
- un déclencheur configuré pour faire basculer le mécanisme de commutation du module principal et des modules auxiliaires en configuration déclenchée lorsque le défaut électrique du deuxième type est un arc électrique se produisant sur une installation connectée à la borne de sortie (74) du chemin de conduction (70) du module principal.

5. Dispositif de protection électrique (14) selon l'une quelconque des revendications 1 à 3, dans lequel le composant fonctionnel est un système de surveillance (352) configuré pour:
- mesurer des grandeurs physiques représentatives du fonctionnement du dispositif de protection (14), et/ou
- détecter l'état de fonctionnement du dispositif de protection, et/ou
- communiquer des informations avec un système d'information distant.

6. Dispositif de protection électrique (14) selon l'une quelconque des revendications précédentes, dans lequel le boîtier (330) comprend une façade (332), qui relie l'extrémité supérieure (340) à l'extrémité inférieure (338) et porte la manette de commutation (190) du module principal (300) et les manettes de commutation (490, 590) des modules auxiliaires (400, 500), et un dos (334), opposée à la façade, par l'intermédiaire duquel le dispositif de protection électrique est configuré pour être monté sur le rail (16), le mécanisme de commutation (150) du module principal étant disposé entre la façade et le premier déclencheur (110).

7. Dispositif de protection électrique (14) selon l'une quelconque des revendications précédentes, dans lequel la chambre de coupure (100) est disposée, selon une direction de hauteur (Z30) du boîtier (330), entre la borne d'entrée (72) et le contact mobile (76) du module principal (300), et est disposée, selon une direction de profondeur (Y30) du boîtier, entre le premier déclencheur (110) du module principal et un dos (334) du boîtier.

8. Dispositif de protection électrique (14) selon l'une quelconque des revendications précédentes, dans lequel le module principal (300) comprend deux chemins de conduction (60, 70), électriquement isolés l'un de l'autre et répartis dans la largeur (X30) du boîtier (330), chaque chemin de conduction comprenant individuellement:
- une borne d'entrée (62, 72), disposée à une extrémité supérieure (340) du boîtier pour être connectée à un peigne d'alimentation (18), appartenant au tableau électrique ;
- une borne de sortie (64, 74), disposée à une extrémité inférieure (338) du boîtier; et
- un contact mobile (66, 76), qui est mobile en rotation par rapport au boîtier, entre une position de conduction, dans laquelle le contact mobile connecte électriquement la borne d'entrée à la borne de sortie de ce chemin de conduction, et une position d'isolement, dans laquelle la borne d'entrée et la borne de sortie dudit chemin de conduction sont électriquement isolées l'une de l'autre.

9. Dispositif de protection électrique (14) selon la revendication 8, dans lequel le boîtier (330) comprend une cloison interne (46) électriquement isolante, qui relie l'extrémité supérieure (340) à l'extrémité inférieure (338) et sépare le boîtier en deux compartiments (48, 50), selon une direction de largeur (X30) du boîtier, les deux chemins de conduction (60, 70) du module principal (300) étant disposés respectivement dans l'un desdits compartiments, le premier déclencheur (110) étant disposé dans un seul desdits compartiments.

10. Dispositif de protection électrique (14) selon l'une quelconque des revendications 8 et 9, dans lequel, lorsque la manette de commutation (190) du module principal (300) est pivotée de la position de fermeture vers la position d'ouverture et que les contacts mobiles (66, 76, 476, 576) du module principal et des modules auxiliaires (400, 500) sont pivotés de leur position de conduction à leur position d'isolement, chaque contact mobile est mobile en rotation par rapport au boîtier (330) autour d'un axe de contact mobile (X66) parallèle à l'axe de manette (X190), les contacts mobiles tournent dans le même sens autour de leur axe de contact mobile respectif et le sens de rotation des contacts mobiles est opposé au sens de rotation de la manette de commutation.

11. Dispositif de coupure électrique (14) selon l'une quelconque des revendications précédentes, dans lequel le module principal (300), le premier module auxiliaire (400) et le deuxième module auxiliaire (500) sont séparés par des parois électriquement isolantes.

12. Tableau électrique (10) comprenant un peigne d'alimentation (18) et un rail de fixation (16) disposé sous le peigne d'alimentation, le tableau électrique comprenant le dispositif de protection électrique (14) selon l'une quelconque des revendications précédentes, le dispositif de protection électrique étant fixé au rail de fixation, de sorte que l'axe de manette (X190) est parallèle au rail de fixation, la borne d'entrée (72) du module principal (300) étant électriquement connectée au peigne d'alimentation, un connecteur (20) du peigne d'alimentation étant enfiché dans la borne d'entrée.
